# EUROPÄISCHE PATENTSCHRIFT

(11) **EP 2 117 876 B1**
(45) Veröffentlichungstag und Bekanntmachung des Hinweises auf die Patenterteilung: **07.07.2010**
(21) Anmeldenummer: 08707223.7
(22) Anmeldetag: 24.01.2008
(51) Int. Cl.: B60P 7/13, B60P 1/64, B61D 45/00, B65D 90/00

(54) **VERRIEGELUNG FÜR EINEN CONTAINER AUF EINEM FAHRZEUG**
MEANS OF LOCKING A CONTAINER ON A VEHICLE
VERROUILLAGE D'UN RÉCEPTACLE SUR UN VÉHICULE

(30) Priorität: 08.02.2007 DE 102007007067; 10.07.2007 DE 102007032407
(43) Veröffentlichungstag der Anmeldung: 18.11.2009
(73) Patentinhaber: 1. RMM Entwicklungsgesellschaft mbH & Co. KG, 21244 Buchholz i.d.N. (DE)
(72) Erfinder: METTERNICH, Heinz-Rüdiger, 21244 Buchholz i.d.N. (DE)
(74) Vertreter: Hansen, Jochen
(86) Internationale Anmeldenummer: PCT/EP2008/000510
(87) Internationale Veröffentlichungsnummer: WO 2008/095605

(56) Entgegenhaltungen:
- EP-A- 1 243 466
- WO-A-2004/045904
- GB-A- 1 200 243

## Beschreibung

Die Erfindung bezieht sich auf eine Vorrichtung zur Verriegelung eines Containers auf einem Fahrzeug, aufweisend einen zum Container-Beschlag passenden Verriegelungsteil (Pilzkopf) und einen Antriebsmechanismus zum Verdrehen und Absenken des Verriegelungsteils und einen auf das Aufsetzen eines Containers auf das Fahrzeug ansprechenden Nocken, der zum Verriegelungsteil benachbart angeordnet ist und die Absetzbewegung und die Gewichtskraft des Containers abfühlt und übersetzt an den Antriebsmechanismus für den Verriegelungsteil überträgt.

Es ist eine Vorrichtung zur Verriegelung eines Containers auf der Ladefläche eines Straßetabahnfahrzeuges oder eines Eisenbahntragwagens bekannt (DE 10 2005 062 339 A1 oder WO 2004045904 A1), die mindestens einen Verrieglungszapfen oder -kopf aufweist, der in entriegeltem Zustand über eine der Öffnungen in einem der Eckbeschläge des Containers einführbar ist und in verriegelte-m Zustand den Container über die Öffnung des Eckbeschlages hintergreifende Vorsprünge sichert und einen Mechanismus zur Betätigung des Verriegelungszapfens aufweist.

Die vorliegende Erfindung befasst sich nun mit Hebel-Federmechanismen, um die Gewichtskraft des Containers auf einfachste Art und Weise in die erforderlichen Antriebskräfte zur Verriegelung und Blockierung einzusetzen.

Nachfolgend werden die wesentlichen Funktionsteile der Vorrichtung der eingangs genannten Art beschrieben, und zwar unabhängig davon, in welcher Weise diese nun bei den einzelnen Ausführungsformen realisiert worden sind.

Wesentlich für die Kraftumwandlung des Gewichts eines aufgesetzten Containers auf die Verriegelung ist eine Art Wippe, die als ein doppelarmiger Hebel ausgebildet ist, an dessen einem Hebelarm am Ende die Gewichtskraft des Containers einwirkt. Mindestens ein Federarm ist mit der Wippe so verbunden, dass dieser oder diese Federarme die entsprechenden Bewegungen der Wippe ebenfalls ausführen, und zwar wird unter dem Einfluss der Gewichtskraft des aufgesetzten Containers über diese Federarme der Pilzkopf bzw. Verriegelungsteil nicht nur in Längsrichtung nach unten in die Verriegelungslage gebracht, sondern dabei auch um 90° verschwenkt. Diese Bewegungen des Pilzkopfes werden bislang von Hand ausgeführt oder mit Hilfe von pneumatischen Hilfseinrichtungen realisiert.

Soll die Verriegelung eines Containers aufgehoben werden, so wird durch eine Längsbewegung der Wippe mit einer entsprechenden Längsbewegung der Federarme der Kraftfluss unterbrochen, der bislang aus der Gewichtskraft des aufgesetzten Containers nach Umwandlung auf den Pilzkopf und die Blockierungsteile wirksam war. Der Pilzkopf kann nun in seine Aufnahmelage zurückgehen, d. h. eine nach oben gerichtete Bewegung und eine Drehbewegung ausführen. Die Kraftübertragungsteile können nicht in ihre Aufnahmelage zurückkehren, solange der Container auf die Wippe bzw. die Federarme noch einwirkt. Beim Abheben des Containers wird dann auch dieser Kraftfluss unterbrochen.

Es liegt auf der Hand, dass sowohl die Wippe bzw. der doppelarmige Hebel und die Federarme ihre Bewegungen geführt ausüben müssen, also sowohl im Hinblick auf die Präzision der Bewegung als auch auf die Zwangsläufigkeit ihre Bewegungen durchführen, was einerseits durch entsprechende angepasste Führungen, andererseits durch Federn erreicht wird.

Die Erfindung wird nachstehend anhand der Zeichnung beispielsweise erläutert.
- Fig. 1: zeigt eine vertikale Schnittansicht durch eine Vorrichtung gemäß der Erfindung kurz vor dem Aufsetzen eines Containers.
- Fig. 2: zeigt eine vertikale Schnittansicht durch eine Vorrichtung gemäß der Erfindung beim anfänglichen Aufsetzen des Containers, wobei ein Funktionsteil dunkler eingelegt worden ist.
- Fig.3: zeigt eine vertikale Schnittansicht durch eine Vorrichtung gemäß der Erfindung, nachdem der Container vollständig aufgesetzt worden ist.
- Fig.4: zeigt eine vertikale Schnittansicht durch eine Vorrichtung gemäß der Erfindung, nachdem die Verriegelung gelöst worden ist.
- Fig. 5: zeigt eine schaubildliche Ansicht der wesentlichen Teile der Vorrichtung gemäß der Erfindung in der verriegelten Lage.
- Fig. 6: zeigt in vergrößertem Maßstab eine schaubildliche Darstellung des Verriegelungsteils.
- Fig. 7: zeigt in vergrößertem Maßstab eine schaubildliche Darstellung des in seinen Funktionsteilen angeordneten Verriegelungsteils.
- Fig.8: zeigt eine schaubildliche Ansicht der wesentlichen Funktionsteile der Verriegelung gemäß der Erfindung.
- Fig. 9: zeigt in schaubildlicher Ansicht eine Darstellung der Schwenkhebel der Verriegelung gemäß der Erfindung.
- Fig. 10: zeigt eine schaubildliche Ansicht des Federhebels mit einem Klotz der Verriegelung gemäß der Erfindung.
- Fig. 11: zeigt in schaubildlicher Ansicht die Führungsteile für den Klotz des Federhebels der Verriegelung gemäß der Erfindung.
- Fig. 12: zeigt in Seitenansicht die Ausgangsstellung der Vorrichtung gemäß der Erfindung vor dem Aufsetzen eines Containers.
- Fig. 13: zeigt eine Seitenansicht der Vorrichtung gemäß der Erfindung, wobei der Container voll aufgesetzt ist und der Verriegelungszapfen gespannt und auch gesichert ist.
- Fig. 14: zeigt eine zu Fig. 13 entsprechende Seitenansicht, jedoch aus einer um 180° versetzten Blickrichtung.
- Fig. 15: zeigt die wesentlichen Teile der Vorrichtung gemäß der Erfindung in der Verriegelungsstellung, allerdings sind zu Zwecken der Klarheit die Verrie- gelungsteile selbst nicht gezeigt.
- Fig. 16: zeigt die Vorrichtung gemäß der Erfindung in der Position, in der der Container noch verriegelt ist, die Verriegelungsteile sich noch in der Verriegelungslage befinden, jedoch die Spanneinheit bereits zurückgezogen worden ist.
- Fig. 17: zeigt die der Fig. 16 entsprechende Darstellung, jedoch in einer um 180° veränderten Ansicht.
- Fig. 18: zeigt in schaubildlicher Ansicht die Darstellung der Teile in der Position nach Figur 17.
- Fig. 19: zeigt eine Seitenansicht der Vorrichtung gemäß der Erfindung, und zwar während des Zurückziehens der Verriegelungsteile über den Handhebel.
- Fig. 20: zeigt eine entsprechende schaubildliche Darstellung, wobei störende Teile der Darstellung weggelassen worden sind:
- Fig. 21: zeigt eine Seitenansicht der Vorrichtung gemäß der Erfindung, in der der Schieber bzw. Handhebel in die Ausgangslage zurückgestellt worden ist, die Verriegelung zurückgedreht und die Sperrschieber sich wieder in der Freigabestellung befinden.
- Fig. 22: zeigt die zu Fig. 21 entsprechende Darstellung, jedoch in schaubildlicher Ansicht.
- Fig. 23: zeigt in seitlicher Ansicht die Situation, in der ein Container von der Verrieglung abgehoben werden kann.
- Fig. 24: zeigt eine schaubildliche Ansicht des Schiebers für die Vorrichtung gemäß der Erfindung.
- Fig. 25: zeigt einen der Sperrteile der Verriegelung für die Vorrichtung gemäß der Erfindung in schaubildlicher Ansicht.
- Fig. 26: zeigt eine schaubildlich Darstellung in der wesentlichen Teile einer dritten Ausführungsform im entriegelten Zustand gemäß der Erfindung, und zwar von der linken zur rechten Seite her betrachtet.
- Fig. 27: zeigt eine zur Figur 26 entsprechende Darstellung im entriegelten Zustand, jedoch aus der Blickrichtung von rechts.
- Fig. 28: zeigt die wesentlichen Teile der dritten Ausführungsform in einer Über- gangslage bei Blickrichtung von rechts nach links.
- Fig. 29: zeigt die wesentlichen Teile der dritten Ausführungsform in einer Über- gangslage bei Blickrichtung von links nach rechts.
- Fig. 30: zeigt die wesentlichen Teile der dritten Ausführungsform im entriegelten Zustand von links nach rechts.
- Fig. 31: zeigt die wesentlichen Teile der dritten Ausführungsform im entriegelten Zustand von rechts nach links.
- Fig. 32: zeigt die wesentlichen Teile der dritten Ausführungsform bei Beginn des Entriegelungsvorganges von links nach rechts.
- Fig. 33: zeigt die wesentlichen Teile der dritten Ausführungsform bei Beginn des Entriegelungsvorganges von rechts nach links.
- Fig. 34: zeigt die wesentlichen Teile der dritten Ausführungsform der Erfindung im entriegelten Zustand jedoch noch bei aufgesetztem Container von links nach rechts.
- Fig. 35: zeigt die wesentlichen Teile der dritten Ausführungsform der Erfindung im entriegelten Zustand jedoch noch bei aufgesetztem Container von rechts nach links.
- Fig. 36: zeigt in abweichendem Maßstab eine Draufsicht auf wesentliche Teile der Entriegelung der dritten Ausführungsform.
- Fig. 37: zeigt in abweichendem Maßstab eine Draufsicht auf wesentliche Teile in schaubildlicher Ansicht der Verriegelungseinrichtung.

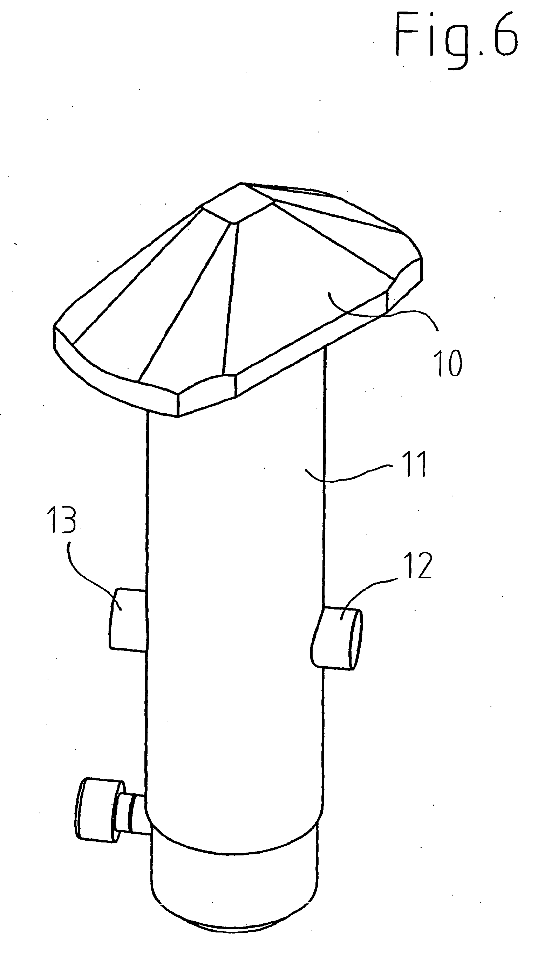

Arbeitsstufen gezeigt, wobei Einzelheiten der Funktionselemente aus den Figuren 6 bis 11 hervorgehen.

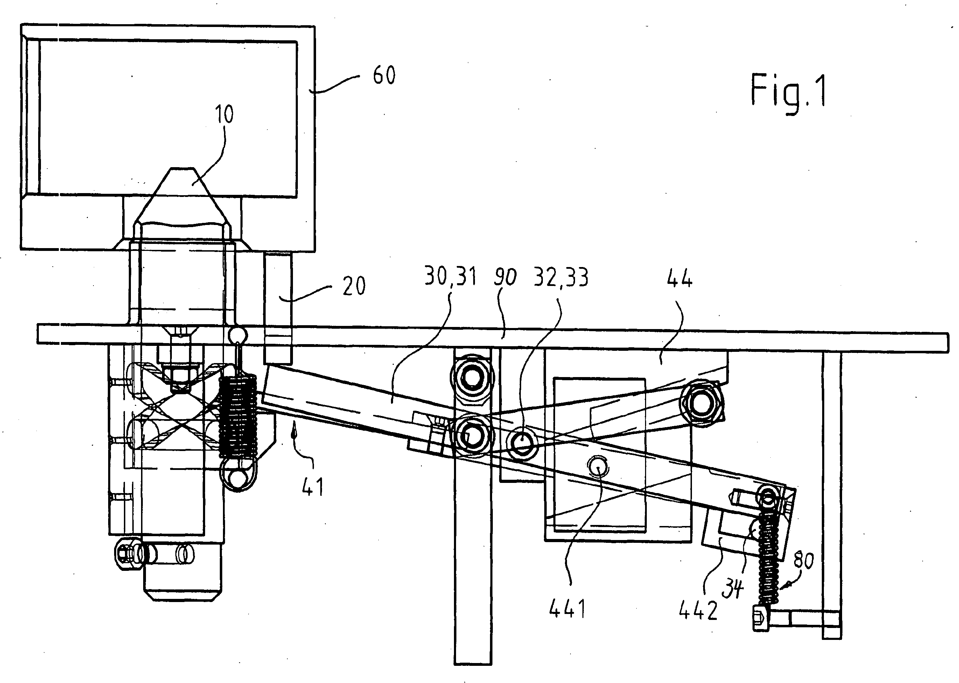

In den Figuren 1 bis 4 ist die Verriegelung gemäß der ersten Ausführungsform der Erfindung in verschiedenen Arbeitsstufen gezeigt, wobei Einzelheiten der Funktionselemente aus den Figuren 6 bis 11 hervorgehen.

In den Figuren 1 bis 5 ist mit 60 der Eckbeschlag eines Containers gezeigt, wobei der Container selbst aus Gründen der Klarheit der Darstellung weggelassen worden ist.

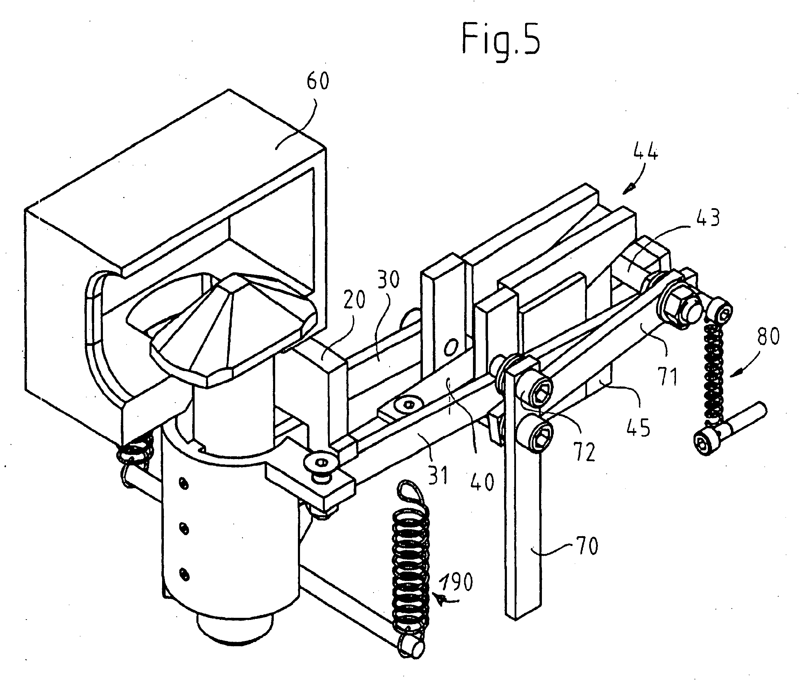

Der Container wird auf die Tragplatte 90 eines Fahrzeuges aufgesetzt, und um die Klarheit der Darstellung zu verbessern, sind in den Figuren 5 bis 11 die Tragplatten des Fahrzeugs weggelassen worden.

Unter Bezugnahme auf die Figuren 1 bis 5 werden zunächst einmal die wesentlichen Funktionsteile benannt, wobei deren Einzelheiten im Zusammenhang mit der Beschreibung der Figuren 6 bis 11 folgen.

In Figur 1 ist der Moment gezeigt, wo ein Container bzw. ein Eckbeschlag 60 eines Containers gerade auf einen Verriegelungsteil aufgesetzt wird. In der Figur ist mit 10 der pilzförmige Pilzkopf bezeichnet, der in den Innenraum des Eckbeschlages 60 eingeführt wird und nach Absenkung des Eckbeschlages um 90° gedreht wird.

Im Stand der Technik sind Einrichtungen bekannt, mit deren Hilfe der Verriegelungsteil bzw. der Pilzkopf 10 um seine Längsachse gedreht und auch in Längsrichtung abgesenkt werden kann. Hierzu können von Hand betätigte Mechanismen aber auch solche mit einem motorischen Antrieb eingesetzt werden. Bei der vorliegenden Erfindung werden diese Bewegungen des Verriegelungsteiles selbsttätig durchgeführt, wobei die erforderliche Energie hierzu vom Gewicht des Containers genommen wird, wenn dieser mit seinem Eckbeschlag 60 auf den Verriegelungsteil abgesenkt wird. Bei der Verriegelung gemäß der Erfindung ist also keine zusätzliche Hilfsenergie erforderlich.

Abweichend von bekannten Ausführungsformen befindet sich in unmittelbarer Nachbarschaft zu dem aus der Bodenplatte 90 eines Fahrzeugs nach oben vorstehenden Verriegelungsteils mit seinem Pilzkopf 10 ein Nocken 20. Dieser Nocken ist durch eine rechteckige Öffnung in der Bodenplatte 90 eines Fahrzeugs hindurchgeführt und im unbelasteten Zustand unter Einwirkung einer Feder 80 und von Schwenkhebeln 30, 31 nach oben hin, also nach außen heraus, vorgespannt. Der Nocken 20 ist so angeordnet, dass beim Absetzen eines Beschlages 60 dieser oben auf diesen Nocken 20 trifft und durch das Gewicht des Containers wird dieser Nocken 20 nach unten bewegt, so dass seine obere Fläche schließlich mit der Oberfläche der Plattform bzw. Bodenplatte 90 des Fahrzeugs fluchtet. Es ist diese Bewegung des Nockens 20, die herangezogen wird, um alle weiteren erforderlichen Bewegungen auszuführen, nämlich die Drehung des Pilzkopfes 10 um 90° und das Absenken des Pilzkopfes 10 zum Verspannen des Beschlages 60.

In der Figur 1 ist der Moment gezeigt, wo der Nocken 20 mit der Unterseite des Beschlages 60 gerade in Berührung gelangt und seinerseits von ihm aus diese nach unten gerichtete Kraft auf ein Paar von Schwenkhebeln 30 und 31 überträgt. Die Schwenkhebel 30 und 31 sind um ein Schwenklager 32, 33 um eine horizontale Achse verschwenkbar, wobei zur Eingriffsfläche mit der unteren Fläche des Nockens 20 gegenüberliegend die Feder 80 vorgesehen ist, die die linksseitigen Hebelarme der Schwenkhebel 30, 31 nach oben hin vorspannt.

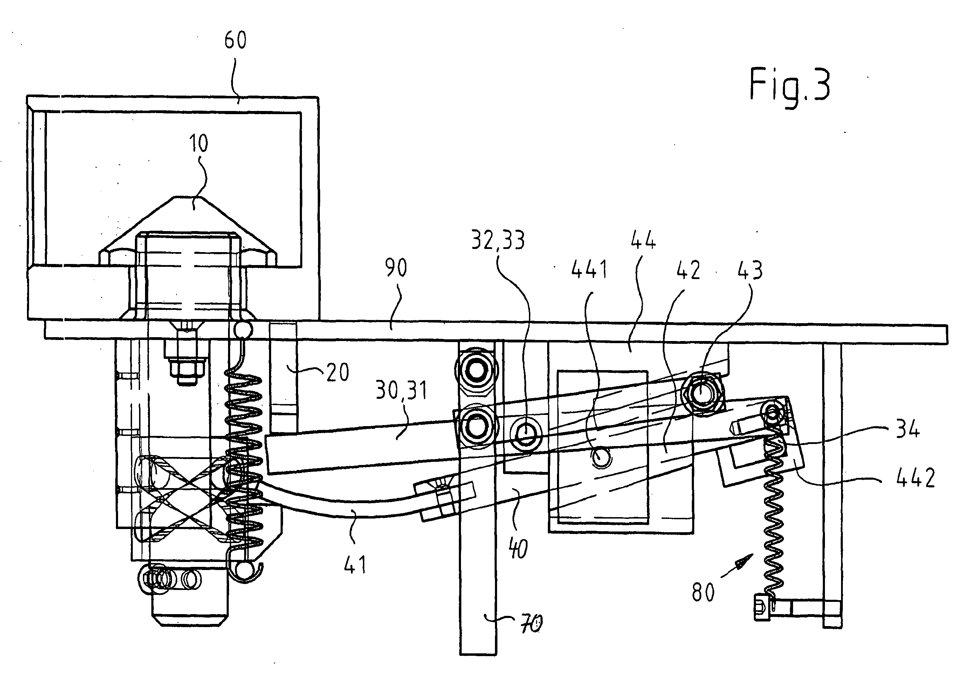

Am Ende der Schwenkhebel 30 und 31, an dem sich die Feder 80 befindet, ist ein Übertragungsteil 34 in Form eines Bolzens befestigt. Dieser Übertragungsteil 34 dient zur Übertragung der Gewichtskraft des Containers mit seinem Eckbeschlag 60 auf den Verriegelungsmechanismus der Verriegelung gemäß der Erfindung. Zu diesem Zweck greift der Übertragungsteil 34 von unten her an einem Federhebel 40 ( Fig. 3) an und dreht bei dem Verschwenken der Schwenkhebel 30, 31 in Gegenuhrzeigerrichtung diesen Federhebel 40 ebenfalls in Gegen-Uhrzeigersinn.

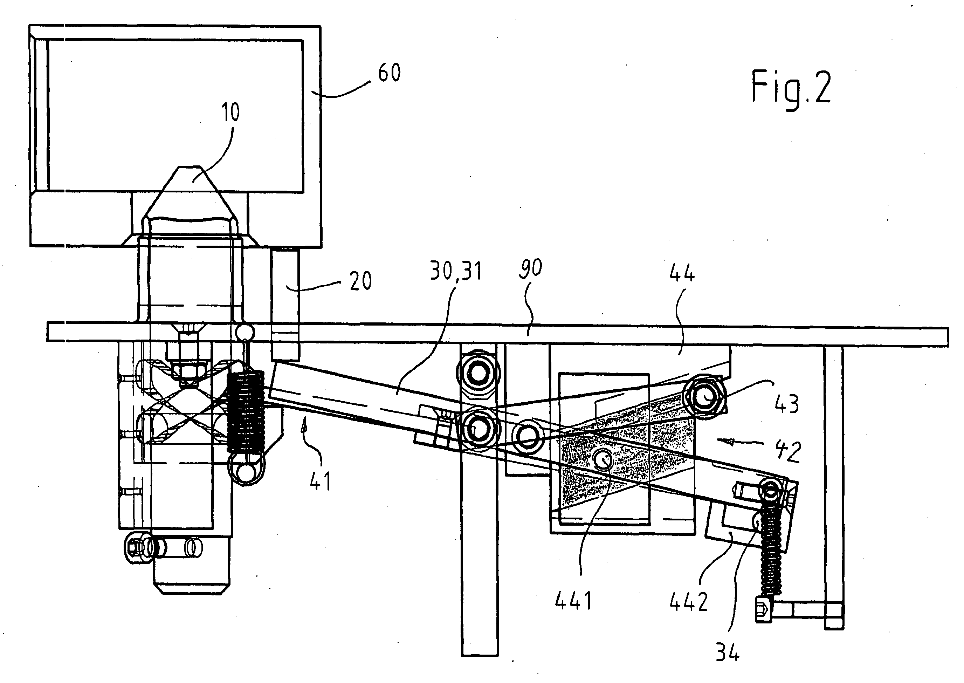

Der Federhebel 40 ist um eine im Raum bewegliche, jedoch horizontale Achse 441 (Fig. 1, 2) verschwenkbar und kann mit seinem linksseitigen freien Ende über eine dort angebrachte Federzunge 41 auf den Verriegelungsteil 10 einwirken, so dass dieser die gewünschte Dreh- und Absenkbewegung ausführt, was noch erläutert wird.

Die Figur 2 entspricht im Wesentlichen der Figur 1, jedoch ist dort ein Klotz 42 mit einem Lager farblich dunkler angelegt, um zu verdeutlichen wie der Federhebel 40 in diesem Klotz 42 auf einer räumlich beweglichen Achse 441 gelagert ist.

In Figur 3 ist der Punkt erreicht worden, wo der Eckbeschlag 60 auf der Bodenplatte 90 des Fahrzeugs aufruht. In dieser Position ist der Nocken 20 in die vollständig eingefahrene Position gebracht worden. Die Schwenkhebel 30 und 31 haben ihre eingeschwenkte Lage eingenommen und alle Funktionsteile befinden sich in der Verriegelungsstellung. In Figur 3 ist auch zu erkennen, dass der Pilzkopf 10 eine um 90° gedrehte Position angenommen hat.

in der Position nach Figur 3 haben die Schwenkhebel 30, 31 über den Übertragungsteil 34 den Federhebel so weit verschwenkt, dass die Blattfeder bzw. Federzunge 41 aus ihrer normalen gestreckten Form herausgelangt ist. Die dort gezeigte Bogenform macht deutlich, wie die vom Gewicht des Containers hergeleiteten Kräfte schließlich über die Verbiegung der Federzunge 41 die Verriegelungsteile bzw. den Pilzkopf 10 in der verriegelten Lage halten.

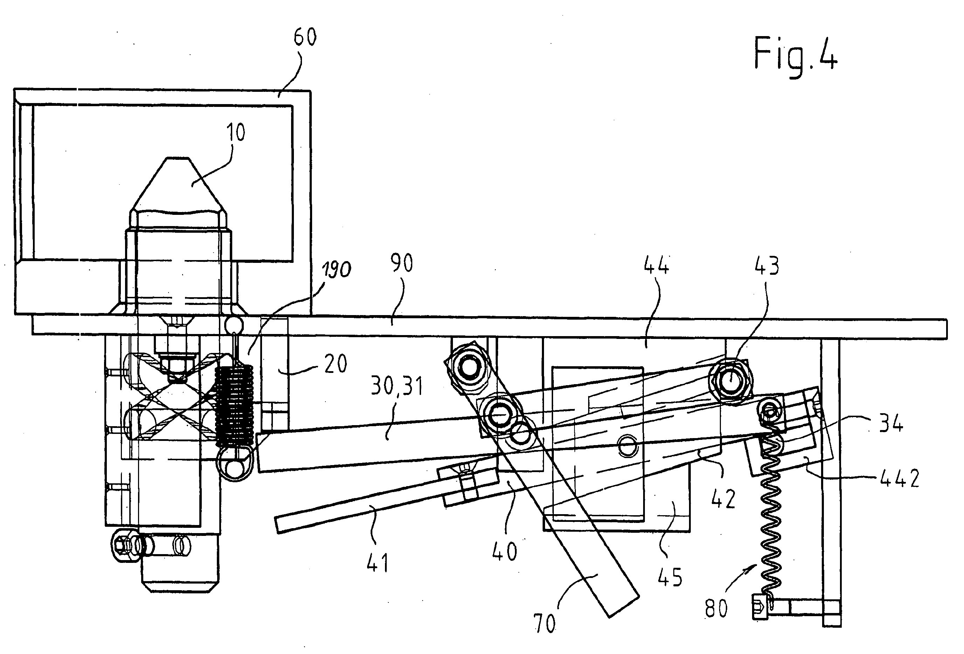

In Figur 4 ist der Zeitpunkt gezeigt, zu dem der auf der Bodenplatte 90 aufruhende Container abtransportiert werden soll, und zu diesem Zweck muss die in Figur 3 gezeigte vollständige Verriegelung beseitigt und darüber hinaus auch Sorge getragen werden, dass nach Entnahme eines Containers das entsprechende Fahrzeug erneut mit einem weiteren Container beladen werden kann.

In Figur 4 ist im Vergleich zur Figur 3 zu erkennen, dass ein Schwenkhebel 70 im Gegen-Uhrzeigersinn verschwenkt worden ist. Der Schwenkhebel 70, wie dies insbesondere Figur 5 deutlich macht, ist ortsfest angelenkt, um die vorgenannte Schwenkbewegung durchzuführen. Im Bereich der Anlenkung 72, und zwar etwas darunter, ist eine Schwenkstange 71 an dem Schwenkhebel 70 gelenkig befestigt. Am freien Ende der Schwenkhebel 71 ist ein Halter 43 in Form eines Bolzens befestigt, der im Wesentlichen horizontal ausgerichtet ist, so wie auch die Schwenkachse bzw. der Anlenkung 72 des Schwenkhebels 70.

In der in den Figuren 3 und 5 gezeigten Lage des Schwenkhebels 70 liegt der Halter 43 am hinteren Ende des Klotzes 42 des Federhebels 40 an und verhindert, dass dieser Federhebel 40 Bewegungen in seiner Längsrichtung ausführen kann. Der Federhebel 40 kann in dieser in den Figuren 1 bis 3 gezeigten Position lediglich um seine horizontale Schwenkachse 441 Schwenkbewegungen durchführen. Durch Verschwenken des Schwenkebels 70 wird jedoch eine Bewegung des Klotzes 42 möglich, so dass der Federhebel 40 eine Bewegung in Längsrichtung ausführt. Bei dieser Bewegung kommt das freie Ende der Federzunge 41 frei und die Federzunge 41 nimmt die in Figur 4 gezeigte Form ein. In dieser Position hat aber unter der Einwirkung mindestens einer Feder 190 der Verriegelungsteil bzw. der Pilzkopf 10 seine Entriegelungsbewegung durchführen können, d. h. er hat sich einerseits um seine Achse um 90° gedreht und wurde sodann um ein entsprechendes Stück angehoben, so dass, wie Figur 4 dies erkennen lässt, der Container mit dem Eckbeschlag 60 ohne Weiteres nach oben abgehoben werden kann.

Ist erst einmal der Container von der Bodenplatte 90 abgehoben, so nimmt der Nocken 20 wieder die in Figur 1 gezeigte Position ein, d. h. er gelangt in die Position, in der ein weiterer Container abgesetzt werden kann.

Nach dieser grundsätzlichen Beschreibung der Funktionen dieser erste Ausführungsform der Verriegelung gemäß der Erfindung sollen nunmehr die einzelnen Elemente näher erläutert werden.

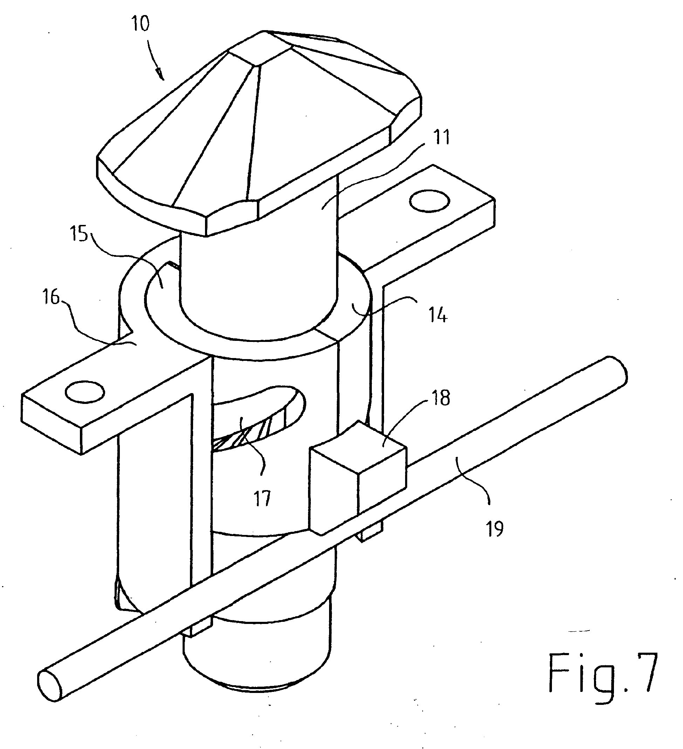

Die Figur 6 zeigt einen Verriegeluhgsteil mit dem Pilzkopf 10 und einem zylindrischen Schaft 11. Im mittleren Bereich stehen einander diametral gegenüberliegend zwei Zapfen 12 und 13 vor, die in Nocken eines aus zwei Teilen zusammengesetzten Zylinders 14, 15 (Fig. 7) geführt werden können. In Figur 7 ist dieser zweiteilige Zylinder 14, 15 gezeigt, wobei der Zylinderteil 15 mit einer Nockenspur 17 ausgebildet ist, die beispielsweise für die Führung des Zapfens 12 vorgesehen ist. Auch der Zylinderteil 14 ist mit einer entsprechenden Spur ausgebildet, um den Zapfen 13 zu führen.

Die Nockenspuren 17 erstrecken sich über den Umfang des Zylinders 14 und 15, und zwar mit einer etwa 45° Neigung. Es ist ersichtlich, dass auf diese Art und Weise der Schaft 11 und damit der Pilzkopf 10 Drehungen um ihre Achsen um 90° ausführen können, wenn der Zylinder 14, 15 in axialer Richtung von oben nach unten bzw.von unten nach oben bewegt wird.

Der Zylinder 14 und 15 ist in einer Halterung 16 geführt, wobei diese Halterung sich nicht über den gesamten Umfang erstreckt, sondern in axialer Richtung einen Schlitz frei lässt, damit ein Vorsprung 18, der außen am Zylinder 14, 15 befestigt ist, axiale Bewegungen von oben nach unten bzw. unten nach oben durchführen kann.

In der Figur 7 ist zu erkennen, dass der Vorsprung 18 mit einer im Wesentlichen horizontal ausgerichteten Stange 19 in Eingriff angeordnet ist, und da die Stange 19 zu beiden Seiten mit Federn 190 (Fig. 5) bestückt ist, wirkt die Stange 19 und damit der Vorsprung 18 so auf den Pilzkopf 10 ein, dass dieser die nach oben ausgefahrene Position einnimmt.

Die Figur 5 zeigt die eine der beiden Federn 190 in gesamter Länge. Linksseitig unterhalb des Eckeschlages 60 ist auch die zweite Feder zu erkennen. Die freien Enden der Federn sind ortsfest unterhalb der oder an der Bodenplatte 90 ortsfest befestigt. Auf diese Art und Weise nehmen die entsprechenden Teile die in Figur 1 und 2 gezeigte Position ein.

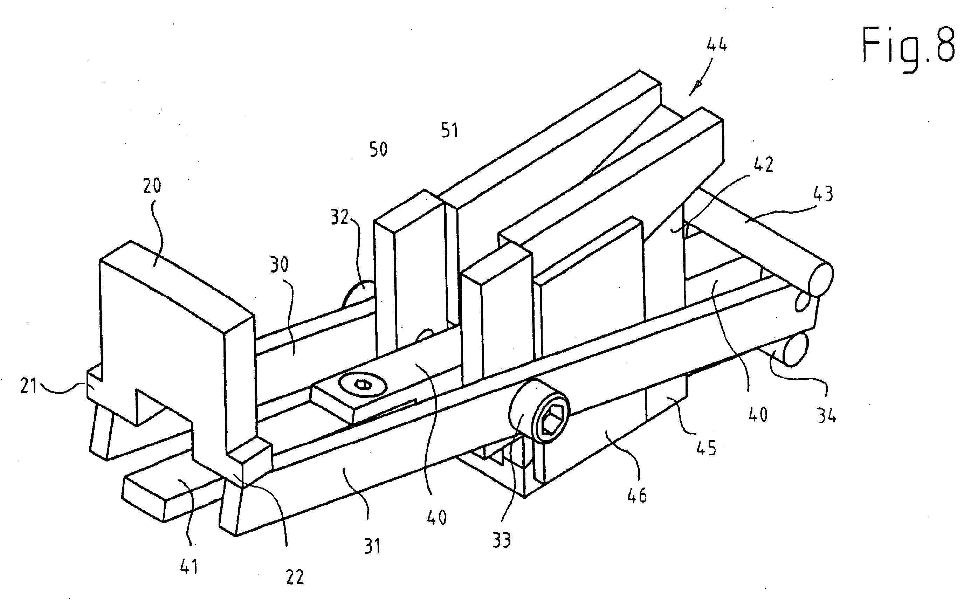

Die Figur 8 zeigt in schaubildlicher Darstellung wichtige Funktionsteile, so auch den Nocken 20.. Es handelt sich hierbei um einen plattenförmigen Teil, dessen obere Fläche mit der Unterseite eines Containers in Eingriff treten kann. Im unteren Teil ist der Nocken 20 mit zwei Füßen 21 und 22 ausgebildet, wobei diese Füße 21 und 22 auf die freien linksseitigen Enden der Schwenkhebel 30 und 31 einwirken die Eingriffsflächen sind nur schematisch dargstellt, bei einer bevorzugten Ausführungsform handelt es sich um evolventenartig angepasste Flächen.

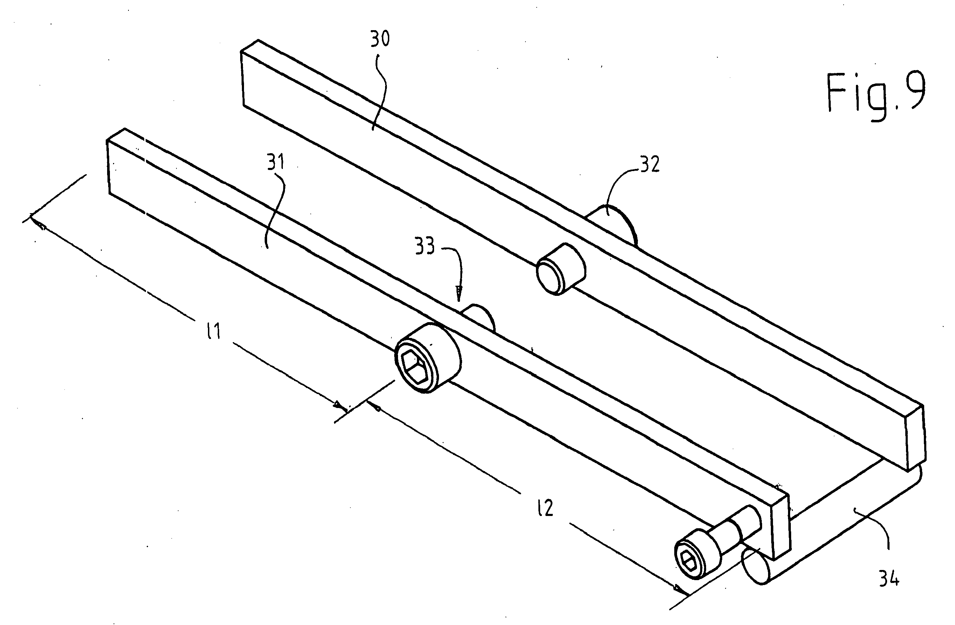

Figur 9 lässt Einzelheiten der Schwenkhebel 30 und 31 erkennen, wobei im Vergleich zu Figur 8 eine Ansicht von rechts her gewählt worden ist. Die beiden Schwenkhebel 30 und 31 sind um die Schwenklager 32 und 33 um eine gemeinsame horizontale Achse verschwenkbar. Die beiden Schwenkhebel 30 und 31 sind am rechtsseitigen unteren Ende über den bereits erwähnten Übertragungsteil 34 verbunden, wobei zur Vereinfachung der Darstellung hier eine Art Schweißverbindung zwischen den rechtsseitigen Enden der Hebel 30 und 31 und dem Übertragungsteil 34 gewählt worden ist.

In Figur 9 ist durch eine Linie der Bereich gezeigt, an dem die Schwenkhebel 30 und 31 mit dem Übertragungsteil 34 verbunden sind. Diese Linie hat zur Schwenkachse der Schwenklager 32, 33 der Schwenkhebel 30 und 31 einen Abstand, der in der Figur mit I 2 bezeichnet worden ist.

Am linksseitigen Ende ist eine senkrechte Linie am Schwenkhebel 31 eingezeichnet und diese soll den Bereich anzeigen, wo dieser Schwenkhebel 31 mit dem Fuß 22 des Nockens 20 in Eingriff tritt. Der Abstand zur geometrischen Schwenkachse ist mit I1 bezeichnet.

In den Figuren ist zur Vereinfachung der Darstellung die Länge I1 etwa gleich der Länge I 2 gewählt worden. Auf diese Art und Weise wird ein Bewegungsweg des Nockens 20 im Verhältnis 1:1 auf den Übertragungsteil 34 übertragen. Es liegt auf der Hand, dass die Möglichkeit besteht, durch geeignete Wahl des Verhältnisses I1 zu I2 einerseits eine andere Wegübertragung als im Verhältnis 1:1 und darüber hinaus auch eine andere Übertragung des Gewichts des Containers zu realisieren.

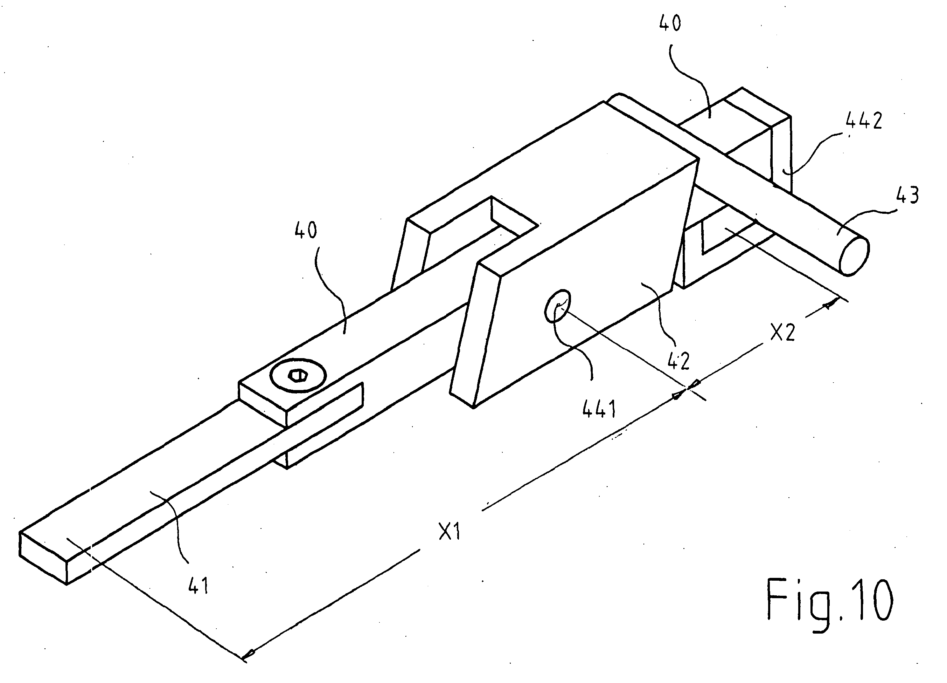

In der Figur 10 ist in einer Betrachtung, von links her, der Federhebel 40 zu erkennen. An dem linksseitigen Ende des Hebels 40 ist die Federstange 41 eingeschraubt worden. Es handelt sich hierbei um ein Federstahlstück oder mehrere Federstahlzungen.

Der Federhebel 40 ist in dem Klotz 42 so gelagert, dass er um die Achse 441, die im Wesentlichen horizontal ausgerichtet ist, Schwenkbewegungen durchführen kann. Diese Schwenkbewegungen werden dem Federhebel 40 an seinem rechtsseitigen Ende erteilt, wo sich eine Art Bügel 442 befindet. Durch den Bügel 442 geht der Übertragungsteil 34 der Schwenkhebel 30 und 31 hindurch. (s. Fig. 2 und 4). Dies bedeutet, dass beim Verschwenken der Schwenkhebel 30, 31 im Gegenuhrzeigersinn eine entsprechende Verschwenkung des Federhebels 40 um seine Achse 441 ebenfalls im Uhrzeigersinn erfolgt

Figur 10 zeigt im Bereich des Halters 43 eine Linie, an der der dort nicht gezeigte Übertragungsteil 34 der Schwenkhebel 30 und 31 eingreift und mit X2 ist der Axialabstand zur Achse 441 bezeichnet. Am linken freien Ende des Federhebels 40 ist eine Linie eingezeichnet, die den Bereich angeben soll, wo die Federzunge 41 des Federhebels 40 auf den Vorsprung 18 des Pilzkopfes 10 einwirkt, so wie dies in Figur 3 zu erkennen ist. Es ist aus Figur 10 auch zu erkennen, dass die Abstände X1 und X2 nicht gleich lang sind und dies bedeutet, dass ein auf den Federhebel 40 durch die Schwenkhebel 30 und 31 übertragener Weg längenmäßig im Verhältnis von X1 : X2 vergrößert wird. Auf diese Art und Weise wird sichergestellt, dass der relativ geringe vertikale Weg des Nockens 20 auf einen großen Weg für den Pilzkopf 10 umgesetzt wird, so dass dieser eine vollständige Drehung um 90° ausführt und den Eckbeschlag 60 auf die Bodenplatte 90 aufdrückt, so wie dies in Figur 3 zu erkennen ist. Die in der Figur 10 gezeigten Beispiele für X1 und X2 sollen die Verhältnisse lediglich schematisch wiedergeben, da durch geeignete Wahl dieses Verhältnisses eine optimale Verriegelung eines Eckbeschlages 60 erreicht werden kann. An dieser Stelle sei betont, dass die Dicke der unteren Wand eines Eckbeschlages 60 in der Praxis zwischen 15 und 25 mm variieren kann.

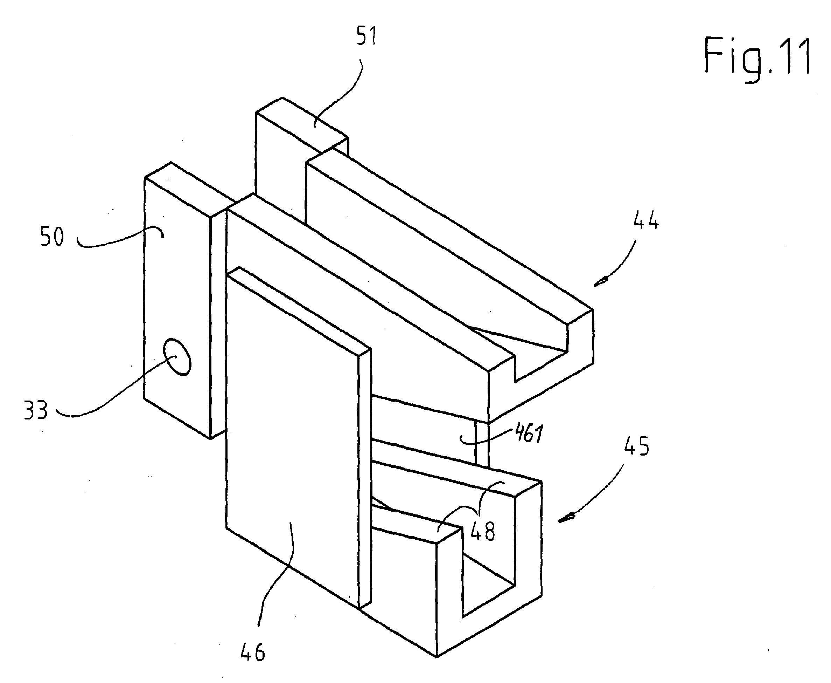

In Figur 10 ist auch noch der Halter 43 zu erkennen, der im Hinblick auf die Längsbewegung des Federhebels 40 eine Bedeutung hat. Zuvor soll jedoch die Führung des Klotzes 42 anhand der Figur 11 erläutert werden.

Figur 11 zeigt ortsfeste Teile der Verriegelung gemäß der ersten Ausführungsform der Erfindung. So zeigt Figur 11 zwei ortsfest angebrachte Lagerplatten 50 und 51, die die Schwenklager 32 und 33 der Schwenkhebel 30 und 31 haltern. Mit 44 ist ein Teil bezeichnet worden, der im Wesentlichen U-förmig ist und mit seinen nach oben gewandten Flächen an der Unterseite der Bodenplatte 90 ortsfest befestigt ist. Wesentlich ist, dass die untere Begrenzungsfläche des U-förmigen Teils 44 schräg verläuft, also zur Horizontalen geneigt ist.

Ein weiterer U-förmiger Teil 45 ist an Seitenplatten 46 und 461 ortsfest befestigt. Der U-förmige Teil 45 weist zwei schräg verlaufende Teile 48 auf. Es handelt sich um die beiden oberen Begrenzungsflächen des U-förmigen Aufbaus.

Die beiden U-förmigen Teile 44 und 45 bilden also zwischen sich eine schräg verlaufende Bewegungsbahn für den Klotz 42, wie dies auch bei Betrachtung der Figuren 1 bis 4 zu erkennen ist, insbesondere in Figur 2.

Der Federhebel 40 mit seinem Klotz 42 wird also bei der Montage von rechts nach links her - bei Blickrichtung gemäß Figur 11 - in diese in beide Richtungen nach oben und unten begrenzte Bahn eingeführt; wobei der Halter 43 (vgl. insbesondere Fig. 2 und 10) den Klotz 42 und damit die Schwenkachse 441 des Federhebels 40 festlegt.

Wenn die Vorrichtung gemäß der ersten Ausführungsform der Erfindung entriegelt werden soll, muss die Federzunge 41 aus dem Eingriff mit dem Vorsprung 18 am Schaft 11 herausgebracht werden und dies wird durch eine im Wesentlichen in Längsrichtung des Federhebels 40 ausgeübte Bewegung bewerkstelligt. Zu diesem Zweck wird bei Betrachtung der Figur 4 der Schwenkhebel 70 im Gegen-Uhrzeigersinn von Hand verschwenkt und auf diese Art und Weise kommt der Halter 43 vom Klotz 42 frei. Aufgrund der Federwirkung führt die Achse 441 im Klotz 42, der durch die Teile 44 und 45 entsprechend geführt ist, eine gemischte Bewegung aus. Die horizontale Achse 441 wird sowohl nach rechts als auch leicht nach oben verschoben, wie dies aus dem Vergleich der Lagen des Halters 43 in Figur 3 und Figur 4 zu erkennen ist. Bei zweckmäßiger Dimensionierung der Federzunge 41 verlässt diese den Eingriff mit dem Vorsprung 18 und nunmehr können die Federn 190 (Fig. 5) die entsprechende Aufwärtsbewegung des Zylinders 14, 15 (Fig. 7) durchführen, so dass letztendlich der Schaft 11 die in Figur 4 gezeigte Lage einnimmt. In dieser Lage ruht jedoch noch der Container mit seinem Beschlag 60 auf der Bodenplatte 90, so dass der Nocken 20 noch nicht wieder nach oben ausgefahren werden kann. Auch die Schwenkhebel 30 und 31 verbleiben noch in ihrer eingeschwenkten Lage. Erst wenn der Eckbeschlag 60 und somit der Container entfernt worden ist, wirkt die Zugkraft der Feder 80 (Fig. 4), so dass die Teile wiederum die Lage einnehmen, die sie in Figur 1 hatten.

Die vorangehende Beschreibung bezieht sich auf eine erste Vorrichtungsform gemäß der Erfindung, jedoch ist zu Zwecken der Klarheit der Darstellung keine Verriegelung des Pilzkopfes 10 für den Eckbeschlag 60 eines Containers gezeigt und beschrieben worden. Die in den nachfolgenden Figuren beschriebene zwei Ausführungsform verfügt über eine solche form- und kraftschlüssige Verriegelung und erfüllt ansonsten die vorangehend beschriebenen Funktionen.

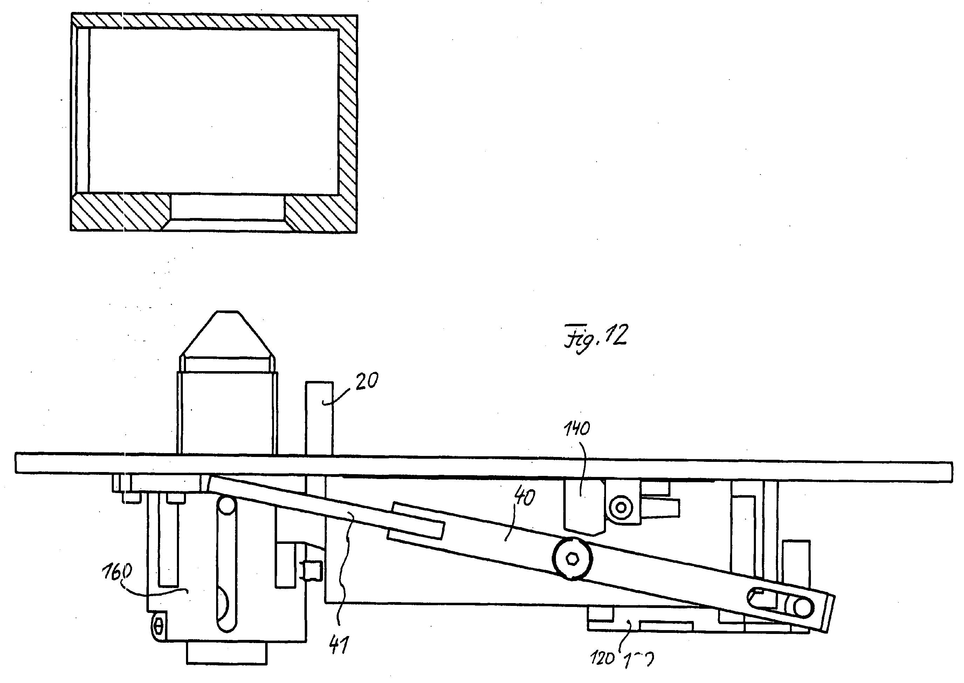

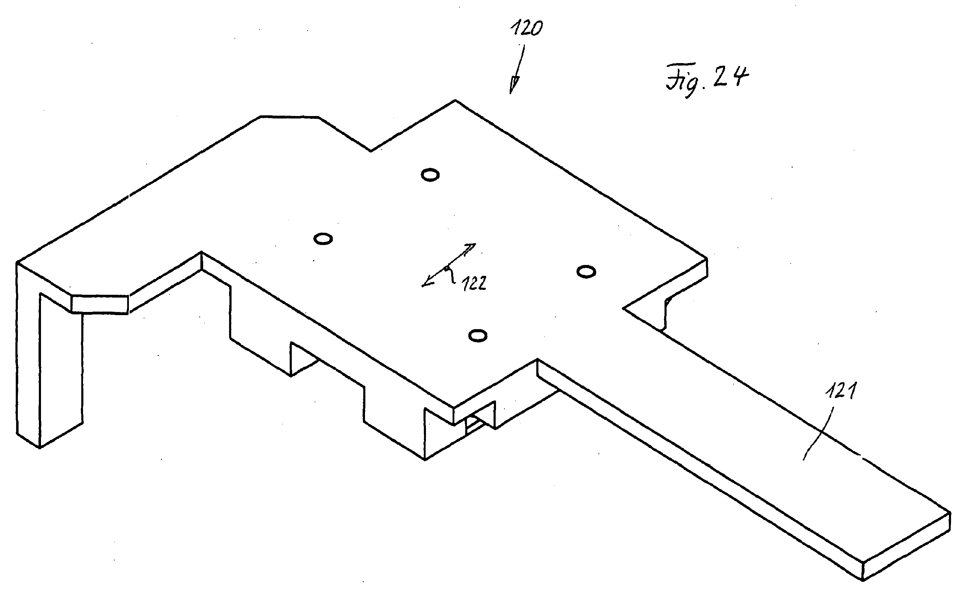

Die für die nachfolgende Beschreibung wesentlichen Teile seien vorangehend vorgestellt. Es handelt sich hierbei um einen Schieber 120, der in der Figur 24 schaubildlich gezeigt ist und über einen Handgriffteil 121 verfügt, der eingesetzt wird, um die Vorrichtung zu entriegeln und wieder in die Bereitschaftsstellung zu verfahren. Der Schieber 120 ist entsprechend dem Pfeil 122 hin- und her bewegbar und wird entsprechend geführt, so dass er eine solche hin- und her gehende Bewegung ausführen kann. In den Figuren 12 und ff sind die entsprechenden Bewegungen auch gezeigt.

Ein weiterer wesentlicher Teil ist ein Sperrklotz 140, der außerhalb seines Schwerpunkts aufgehängt ist und entsprechend Schwenkbewegungen durchführen kann. Er ist mit zwei Schrägungen versehen und diese dienen dazu, die Schwenkbewegungen des Federhebels 40 in den unterschiedlichen Positionen zu begrenzen.

Weiterhin sind zwei Sperrteile 150 vorgesehen, die in der Sperrfunktion sicherstellen, dass der verriegelte Container sich von dem zugehörigen Fahrzeug nicht lösen kann, und zwar einfach deshalb, weil die Sperrteile in der entsprechenden Position jedwede Bewegung des Pilzkopfes 10 verhindern.

Die beiden Sperrteile 150 arbeiten entsprechend mit einem glocken- oder haubenförmigen Teil 160 zusammen, der den Schaft des Pilzkopfes 10 umgibt. Dieser Teil 160 ist mit zwei Schlitzöffnungen versehen, in die die Sperrteile 150 eingeführt werden können. Der haubenförmige Teil 160 sorgt dafür, dass über den Nocken 20 unter der Belastung eines Containers eine Abwärtsbewegung in eine Drehbewegung und Absenkbewegung des Pillzkopfes 10 umgewandelt wird, wie dies vorangehend schon beschrieben worden ist.

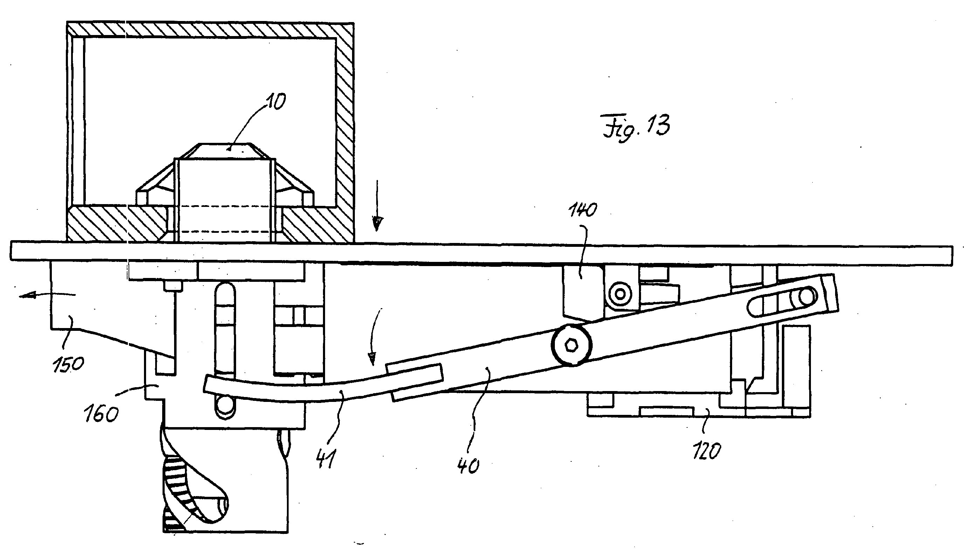

Ausgehend von der Figur 12, der Ausgangsstellung, wird durch Aufsetzen des Containers die entsprechende Drehbewegung des Pilzkopfes 10 durchgeführt. Der untere Teil seines Schaftes 11 wird durch den Federhebel 40 und die Federzunge 41 in diese verriegelte Lage gedrückt. Die Sperrteile 150 werden bei Blickrichtung der Figur 13 nach links verschoben und verhindern, dass sich der Container ungewollt lösen kann.

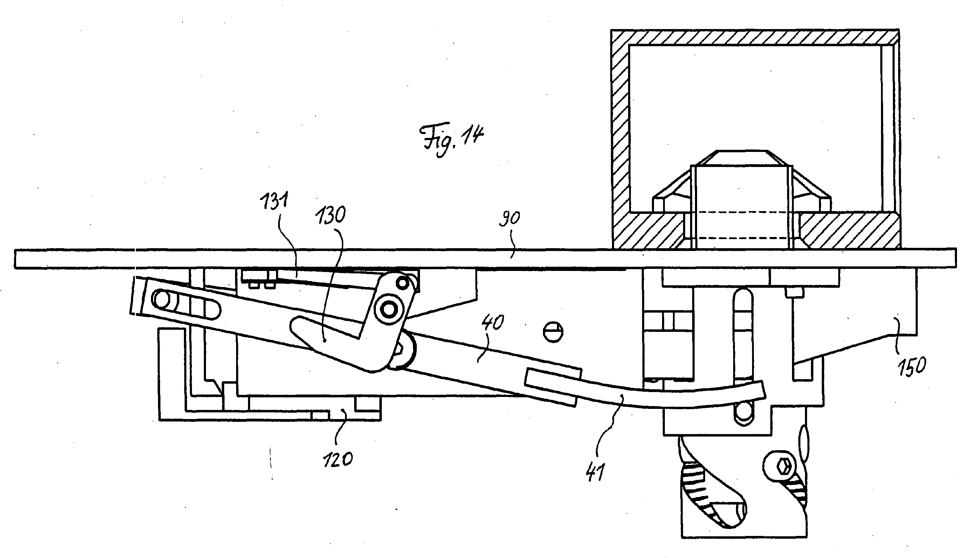

Die um 180° Grad versetzte Ansicht der Figur 14 im Vergleich zur Figur 13 zeigt diese Situation und lässt auch erkennen, dass der Schieber 120 mit seinem Schlitten sich in derjenigen Position befindet, in der er keine Funktion ausüben kann. In Figur 14 ist das die linksseitige, in Figur 13 die rechtsseitige Position.

Figur 14 zeigt auch einen Sperrhebel 130 in einer Position, in der er keine Funktion ausüben kann. Der Hebel 130 ist als Winkelhebel ausgebildet, der um eine horizontale Achse verschwenkbar ist. Die entsprechenden Schwenkbewegungen werden ihm über einen Hebel 131 erteilt, der an der Bodenplatte 90 der Vorrichtung befestigt ist. Dies ist aus der Figur 14 am besten zu erkennen.

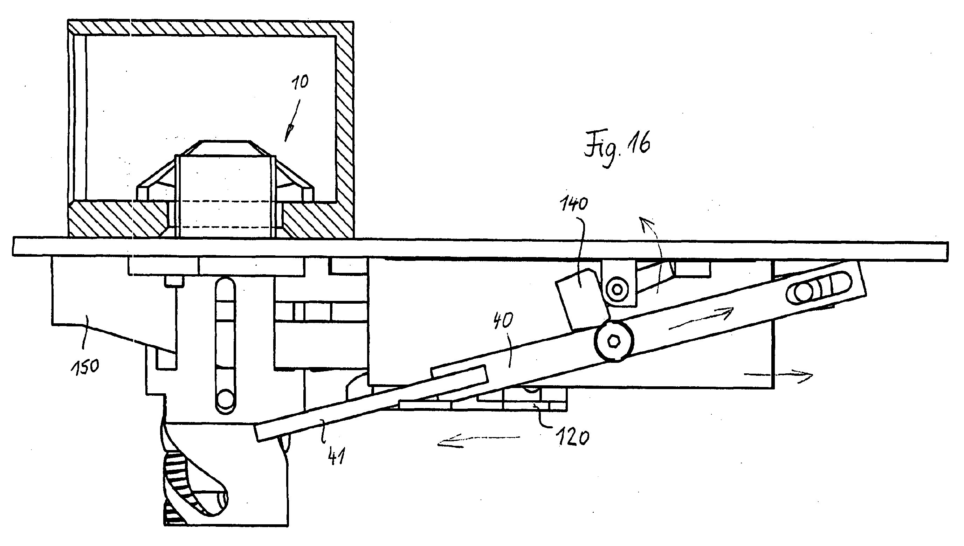

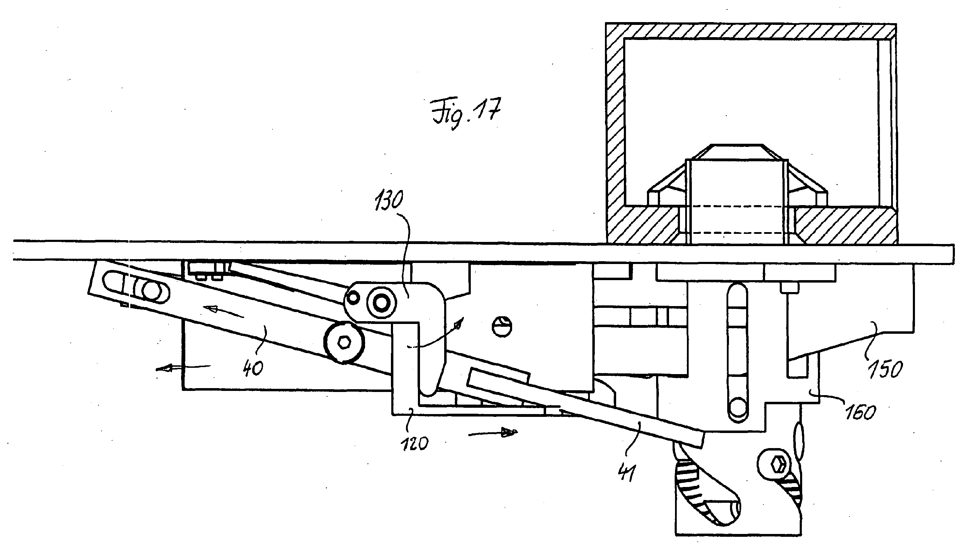

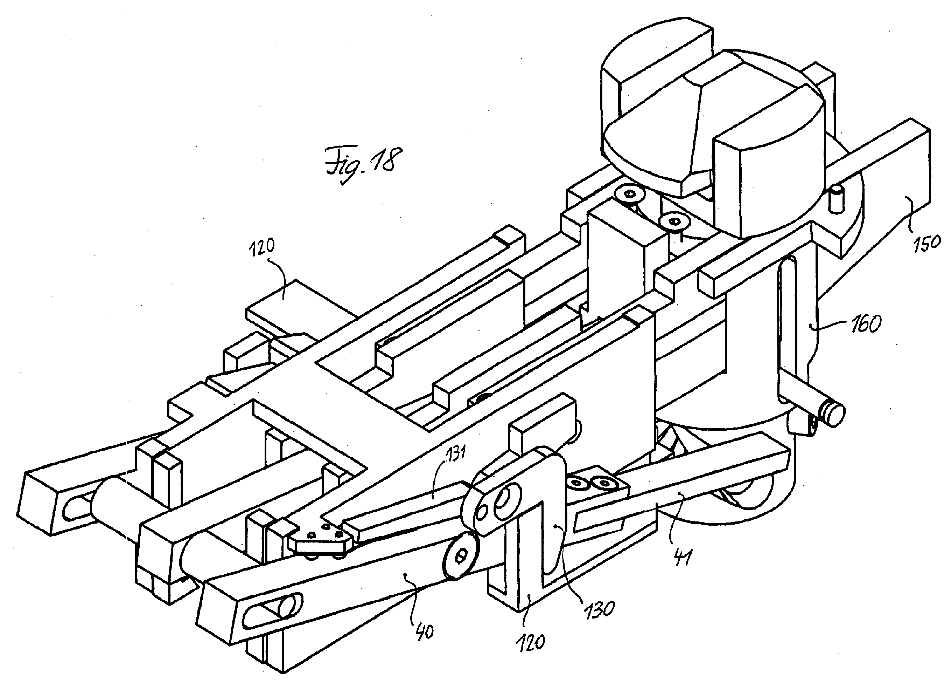

Figur 16 zeigt die Position wesentlicher Teile, nachdem der Schieber 120 von rechts nach links bewegt worden ist. Durch diesen Bewegungsvorgang ist der Federhebel 40 mit seiner Federzunge 41 in Längsrichtung nach rechts bewegt und etwas verschwenkt worden, so dass die Federzunge 41 nicht mehr im Eingriff ist. Der Pilzkopf 10 im Eckbeschlag des Containers kann sich jedoch in dieser Position noch nicht bewegen, da die Sperrteile 150 noch in der Verriegelungsposition sind. Der Klotz 140 legt die entsprechende Lage des Federhebels 40 fest. Die in der Figur 16 gezeigten Pfeile sollen die entsprechenden Bewegungen darstellen. Die Figur 17 zeigt die entsprechende Situation, und da sie eine Darstellung in einer um 180° versetzten Richtung wiedergibt, ist zu erkennen, dass der Schieber 120 in seine rechtsseitige Position gefahren worden ist und hierbei in seiner Bewegung durch den verschwenkten Hebel 130 begrenzt worden ist. Figur 18 zeigt diese Situation in schaubildlicher Darstellung, wobei unwesentliche Teile weggelassen worden sind. Figur 18 lässt auch erkennen, wie der Hebel 130 über den federnd aufgehängten Hebel 131 verschwenkt wird.

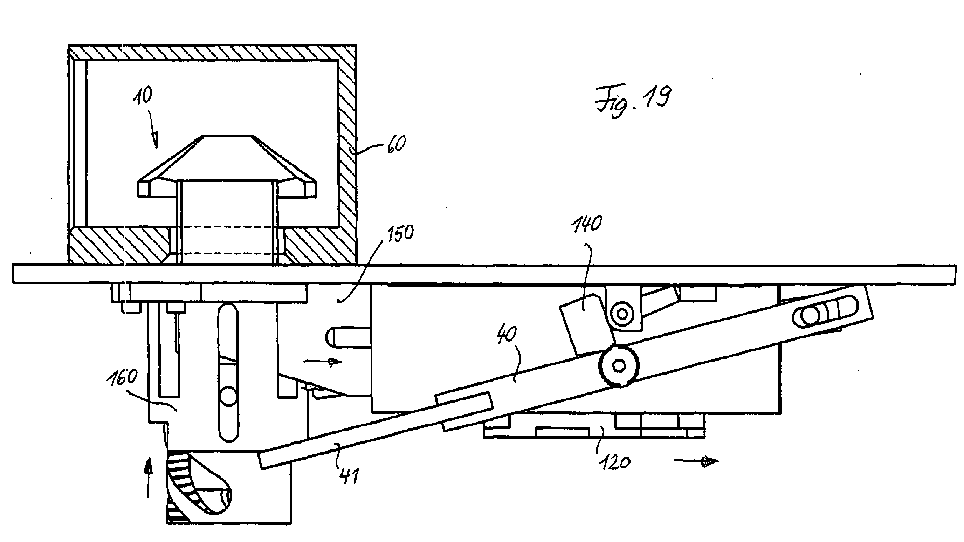

Der nächste Schritt zur Entriegelung der Vorrichtung gemäß der zweiten Ausführungsform der Erfindung ist in Figur 19 zu erkennen. Der Schieber 120 wird nach rechts bewegt und nimmt die beiden Sperrteile 150 mit. Der links unten in Figur 19 gezeigte nach oben gerichtete Pfeil zeigt, dass nunmehr unter der Einwirkung nicht gezeigter Federn der Pilzkopf 10 verdreht wird, d.h. aus der Sperrstellung des Eckbeschlages 60 sich herausdreht.

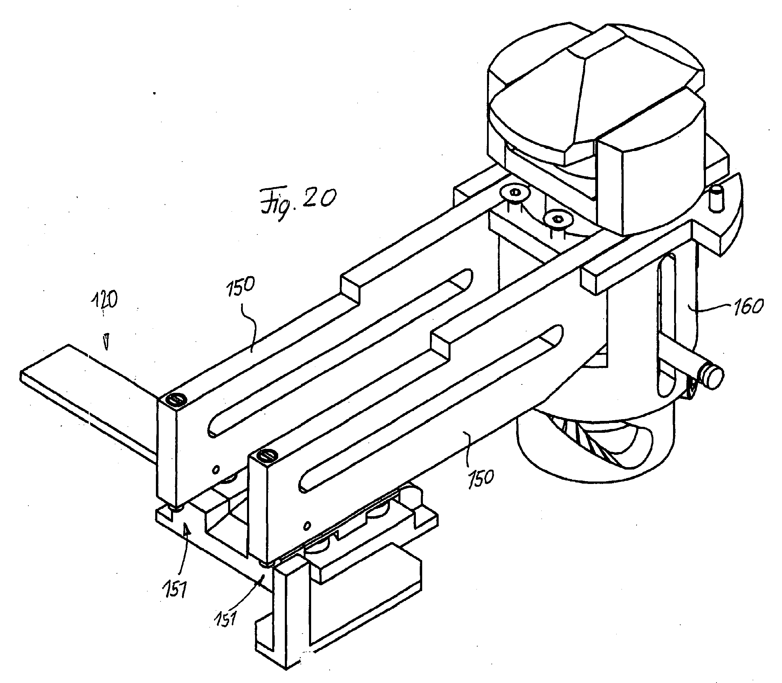

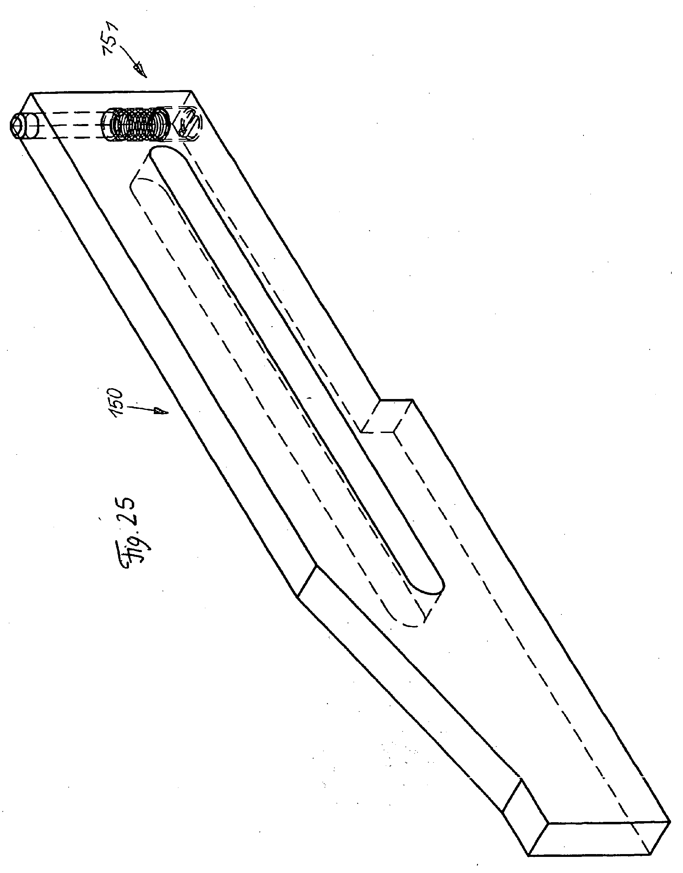

Figur 20 zeigt eine schaubildliche Darstellung der in Figur 19 gezeigten Teile und lässt insbesondere erkennen, wie durch eine Bewegung von rechts nach links her der Schieber 120 die Sperrteile 150 von rechts nach links mitnimmt. Die entsprechenden Vorsprünge sind mit 151 bezeichnet. Diese Vorsprünge befinden sich, wie Figur 25 zeigt, im hinteren Ende der Schieber bzw. Sperrteile 150 und sind nach unten hin und nach außen hin über eine Feder vorgespannt. In der in Figur 20 gezeigten Position kann der Schieber 120 über seine entsprechend ausgebildeten Vorsprünge die Sperrteile 150 mitnehmen. Die weitere Bewegung des Schiebers 120 führt dann jedoch dazu, dass die Vorsprünge 151 über Schrägungen an ortsfesten Teilen in die eingefahrene Position gebracht werden. Die eingefahrene Position der Vorsprünge 151 gegen die Wirkungen der Federn ist die Voraussetzung dafür, dass in einem nachfolgenden Verriegelungsvorgang die Sperrteile 150 wieder in ihre verriegelte Position gebracht werden können.

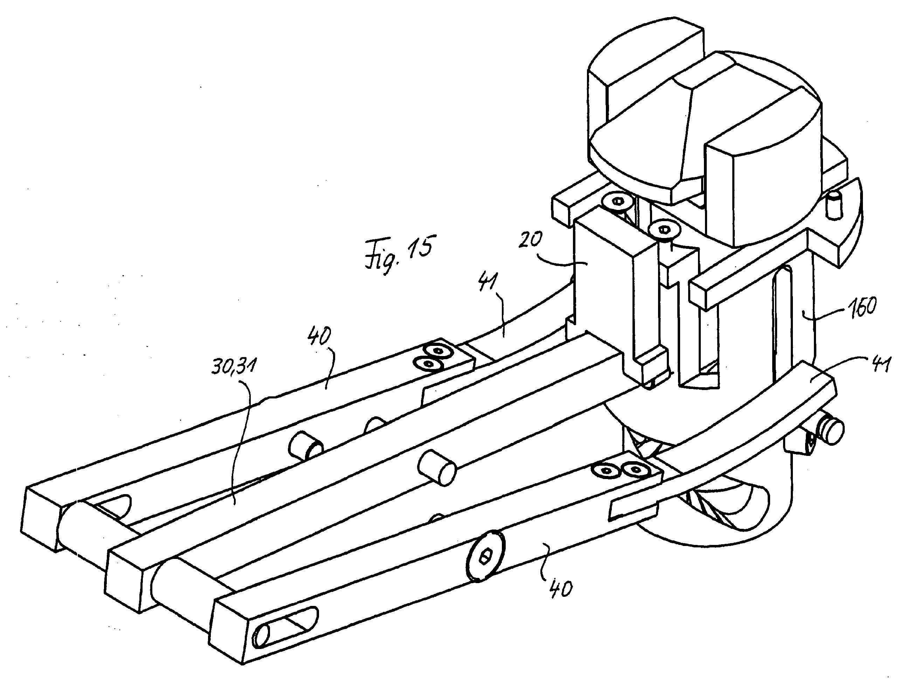

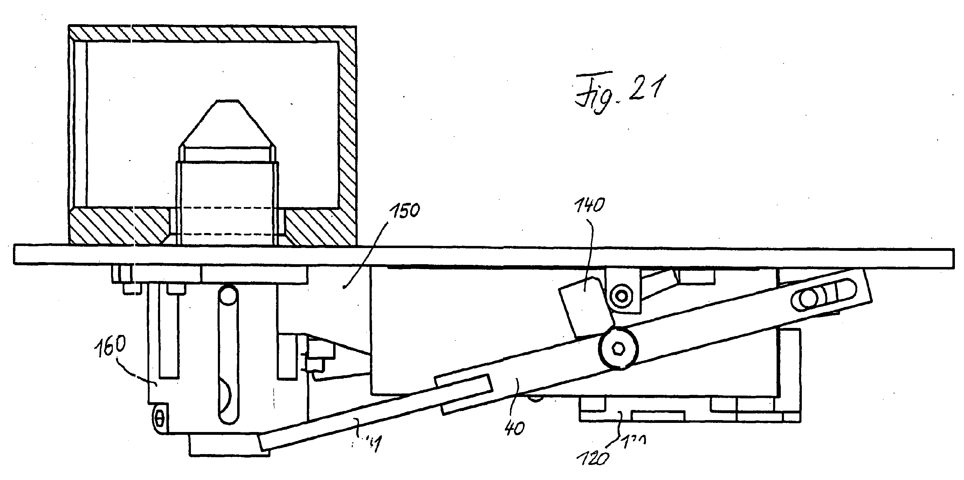

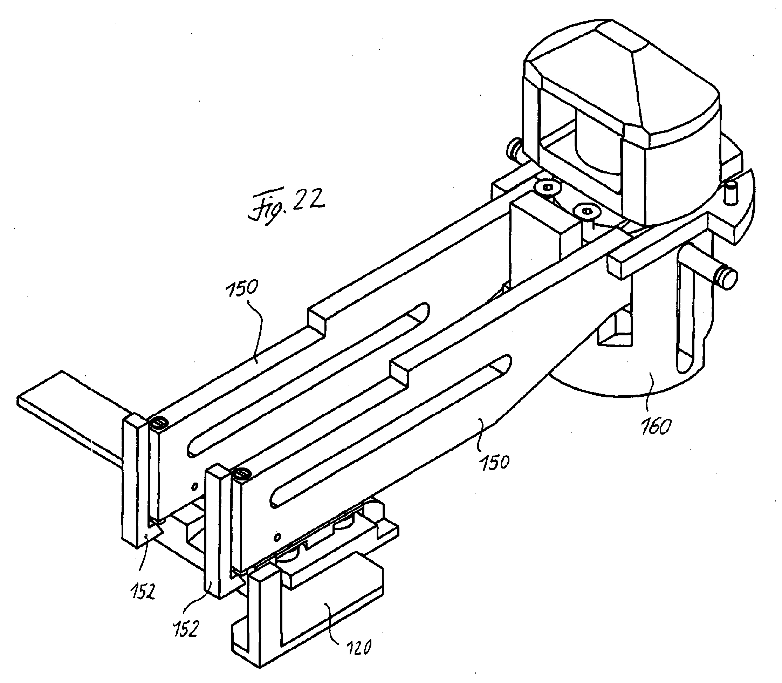

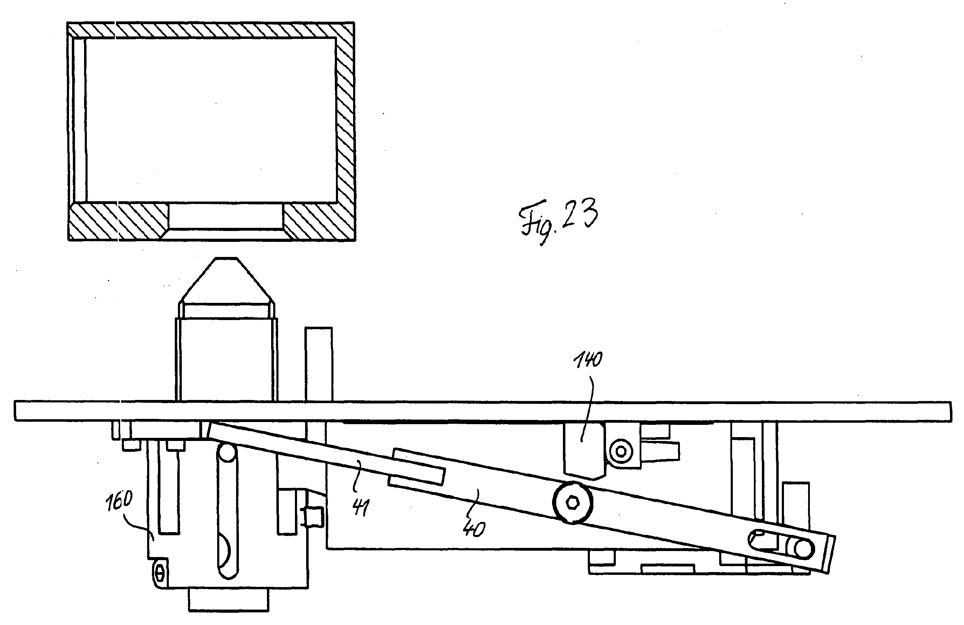

Die in den vorangehenden Figuren 12 bis 25 gezeigte zweite Ausführungsform der Vorrichtung gemäß der Erfindung lässt erkennen, dass die Verriegelung eines Containers lediglich durch Aufsetzen über sein Eigengewicht bewerkstelligt werden kann. Diese Verriegelung ist so weit geführt worden, dass der Container sich nicht unbeabsichtigt von seinem Fahrzeug lösen kann.

Soll hingegen der Container vom Fahrzeug getrennt werden, so ist über einen Handhebelmechanismus durch eine einfache hin- und her Bewegung einerseits die Entriegelung möglich und andererseits werden die entsprechenden Elemente in die Ausgangsposition gebracht, so dass wiederum ein weiterer Container durch einfaches Aufsetzen verriegelt werden kann.

Die Bewegung des Handhebels bzw. des Schiebers 120 ist vorangehend beispielsweise beschrieben worden. Es liegt auf der Hand, die entsprechende Bewegung über einen doppelt wirkenden Pneumatikzylinder durchzuführen, wenn dies gewünscht wird.

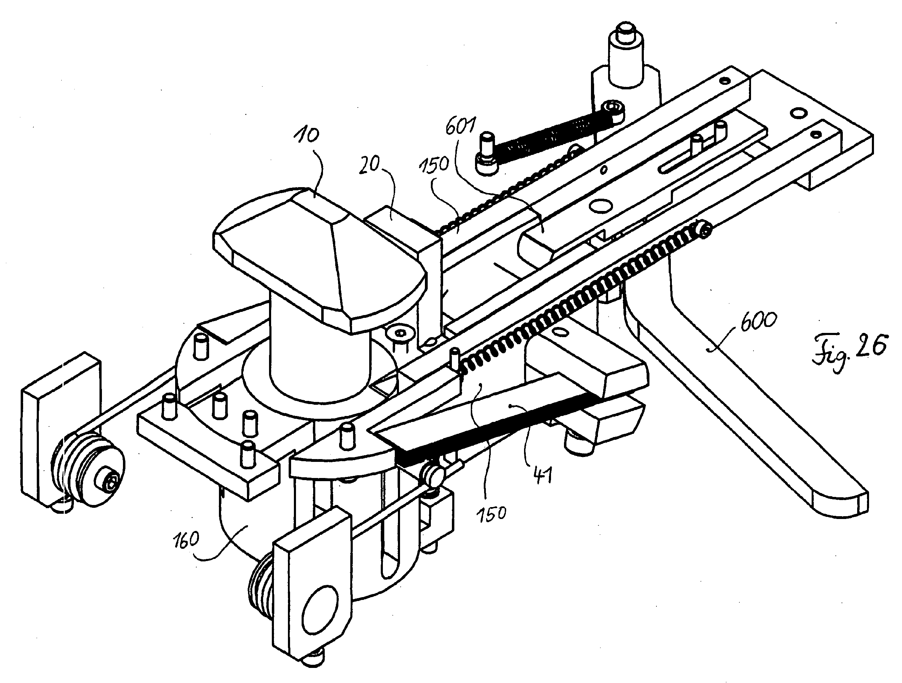

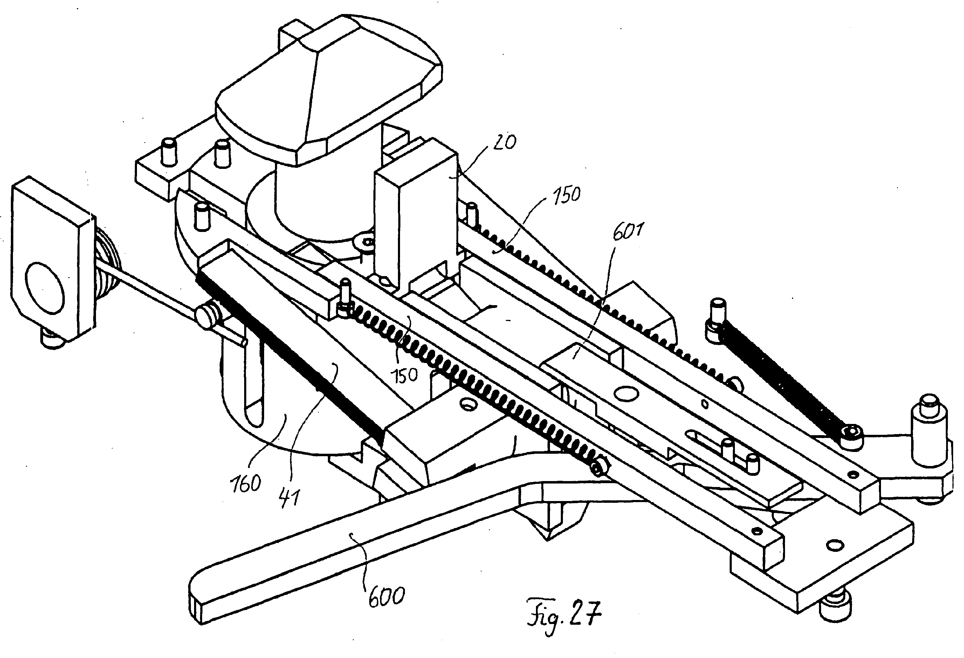

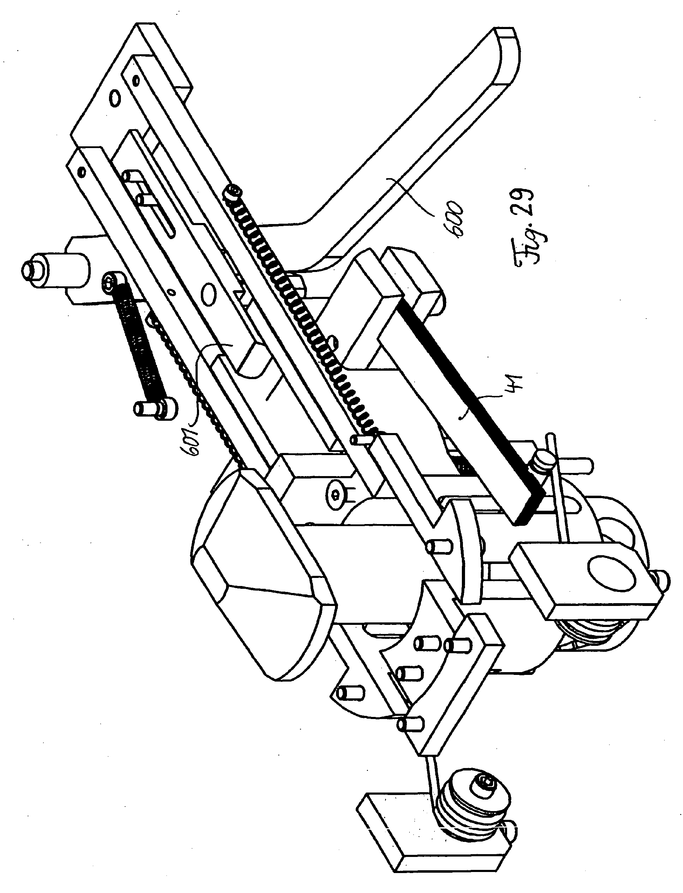

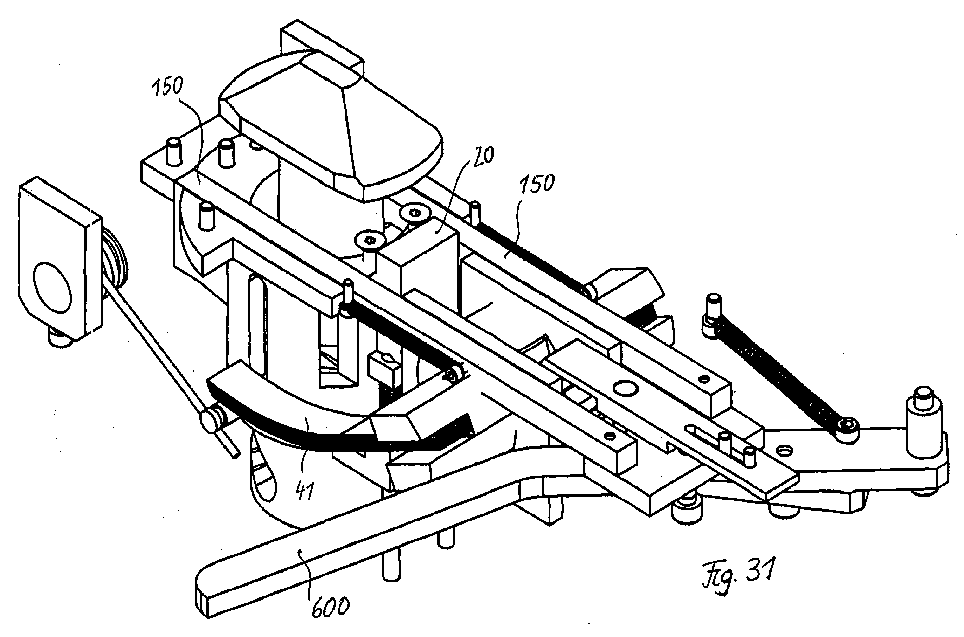

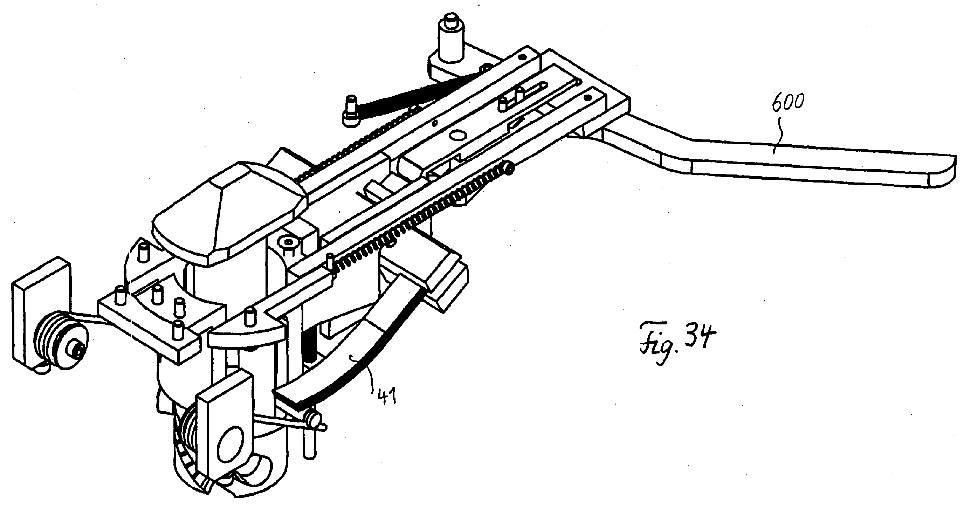

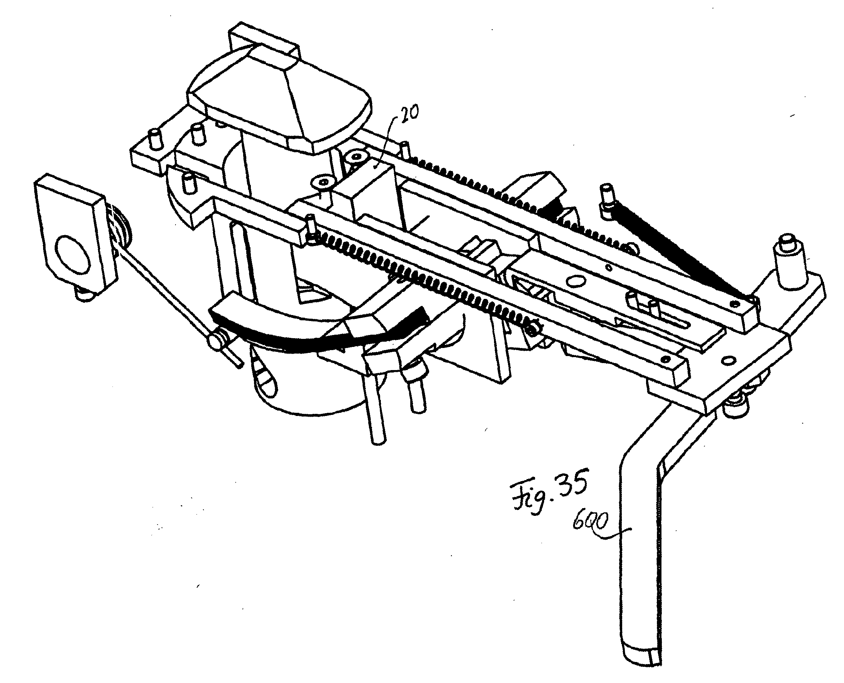

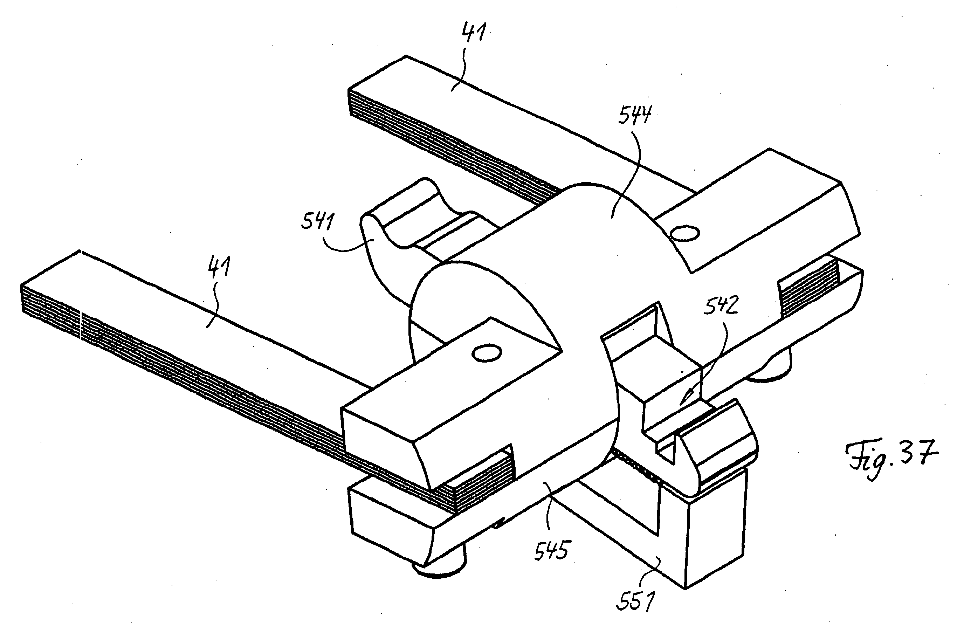

Bei der Beschreibung der dritten Ausführungsform der Erfindung wird Bezug genommen auf die Beschreibung der Figuren 26 bis 37. Hierbei sei vermerkt, dass die wesentlichen Teile, die auch in den Ausführungsformen 1 und 2 vorhanden sind, hier nicht im Einzelnen beschrieben worden sind und zum Teil in den Figuren auch nicht mit Bezugszeichen versehen worden sind. Aus der Ähnlichkeit der Elemente ist jedoch zu erkennen, welche Elemente den einzelnen Ausführungsformen gemeinsam sind.

In Fig. 26 ist der Zustand gezeigt, bei dem kein Container auf das entsprechende Fahrzeug aufgesetzt worden ist. Entsprechend nimmt der Nocken 20 seine ausgefahrene, d. h. vollständig nach oben gerichtete Position ein.

Die Feder 41 übt auf den Pilzkopf keinerlei Funktionen aus, einfach deshalb, weil der Nocken 20 noch nicht durch das Aufsetzen eines Containers durch dessen Eigengewicht betätigt worden ist.

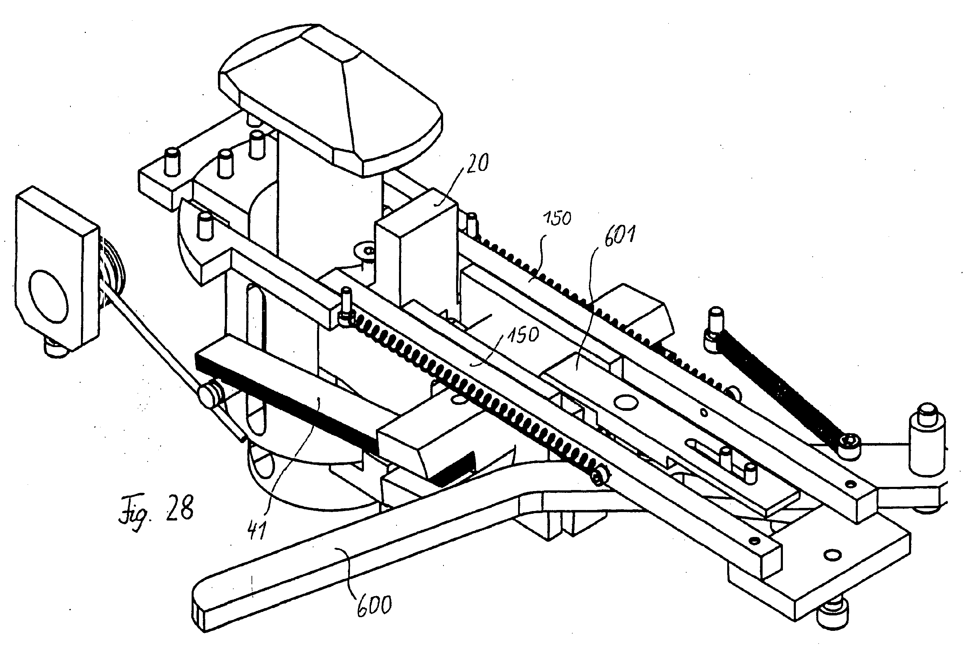

Fig. 28 zeigt eine Übergangsposition, bei der der Nocken 20 bereits unter dem Gewicht eines aufgesetzten Containers nach unten verschoben worden ist und entsprechend der Pilzkopf bereits eine Drehung ausgeübt hat. Diese abwärts gerichtete Bewegung des Pilzkopfes wird über die Federzungen 41 bewerkstelligt, die auf nach außen vorstehende Stifte am Schaft des Pilzkopfes angreifen, wobei dieser nach unten gerichteten Bewegung Spiralfedern mit ihrer Federkraft entgegenwirken.

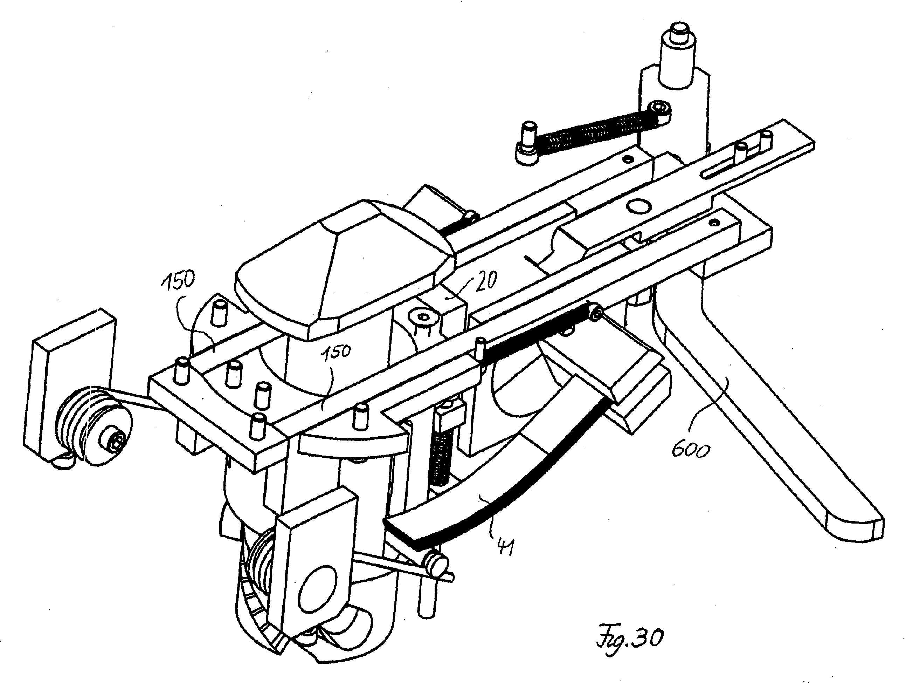

In Fig. 30 ist der Nocken 20 ganz nach unten geführt worden, und nunmehr befindet sich der Pilzkopf in seiner abgesenkten Lage, d. h. ein Container ist in dieser Lage vollständig verriegelt und kann auch nicht unbeabsichtigt vom Fahrzeug entfernt werden. Bewerkstelligt wird die blockierte Lage über die Federkraft der Federzungen 41 und auch durch die Schieber oder Sperrteile 150, die in der Sperrlage verschoben worden sind.

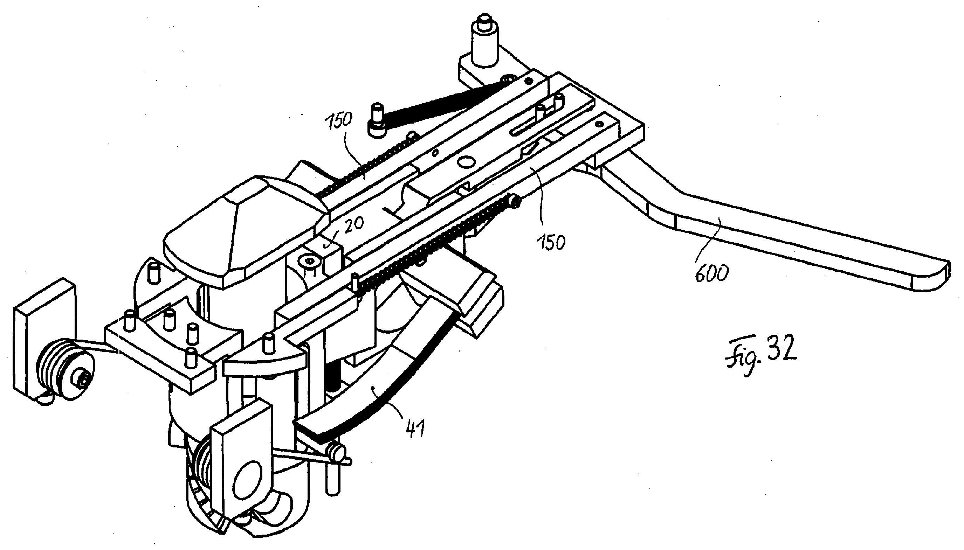

Fig. 32 zeigt den Beginn des Entriegelungsvorganges und zu diesem Zweck wird ein Hebel 160 bei Blickrichtung der Fig. 32 im Gegenuhrzeigsinn verschwenkt. Auf diese Art und Weise werden die Sperrteile 150 von links nach rechts verschoben. Auch werden die Federzungen 41 aus ihrer Eingriffslage herausbewegt. Fig. 32 zeigt diese Position kurz bevor die Federzungen aus dem Eingriff herausgelangen bzw. unter der Einwirkung der beiden Spiralfedern die beiden Spiralfedern die entsprechenden Eingriffsteile der Federzungen 41 nach oben bewegt werden.

Nachfolgend wird der hierzu erforderliche Mechanismus beschrieben:

Ein Entriegelungshebel 600 ist bei 602 ortsfest angelenkt und kann Schwenkbewegungen durchführen. Zu diesem Zweck kann etwa von Hand der Schwenkhebel 600 ergriffen werden oder über irgendeinen Mechanismus, beispielsweise einen Zylinder oder dergl., betätigt werden. Der Entriegelungshebel 600 ist über eine Spiralfeder 603 in die Entriegelungslage vorgespannt.

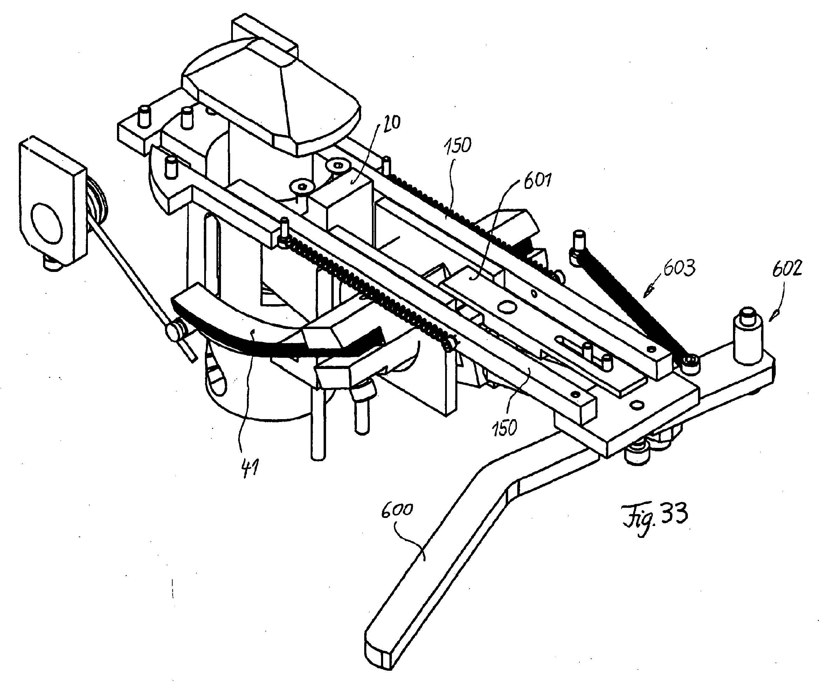

Fig. 33 lässt erkennen, wie die beiden Sperrteile 150 angeordnet sind, so dass sie über ein Verbindungsteil und einen Stift durch die Schwenkbewegung des Entriegelungshebels 600 bei Blickrichtung der Fig. 33 von links nach rechts verschwenkt werden können, also aus ihrer Verrieglungslage herausgebracht werden können.

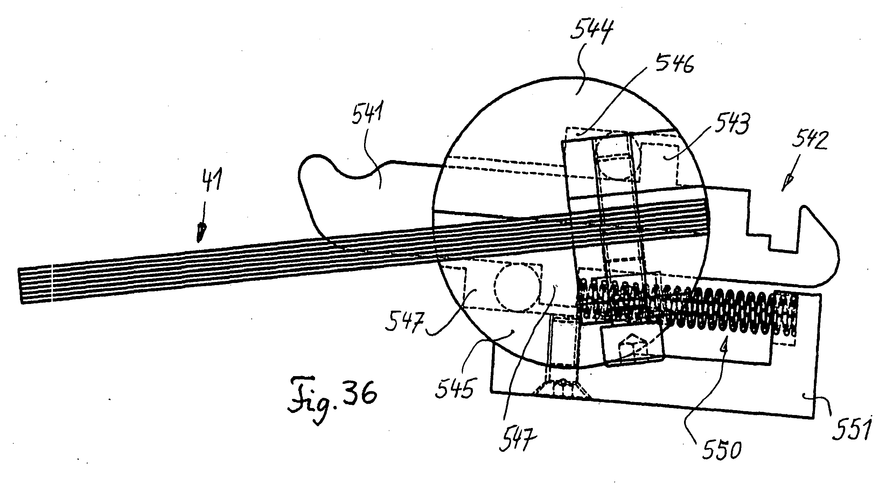

Der Entriegelungshebel 600 wirkt mit einem Betätigungsteil 601 zusammen und kann diesem in Längsrichtung gehende Bewegungen erteilen. Der Betätigungsteil 601 ist an seinem linken freien Ende mit einer nach unten vorstehenden Klinke versehen, die mit einer Klinkenausnehmung 542 (Fig. 36) eines Schubteils zusammenwirkt, der nun seinerseits mit den Federzungen 41, wie bereits im Zusammenhang mit den anderen Ausführungsformen beschrieben, verbunden ist.

Der Schubteil 541 hat die Form eines Stabes und wirkt an seinem linksseitigen Ende mit dem Nocken 20 zusammen. Wird der Nocken 20 aufgrund des Gewichtes eines Containers nach unten bewegt, so führt dieser Teil 541 bei Blickrichtung der Fig. 36 eine Schwenkbewegung in Uhrzeigerrichtung aus. Es handelt sich nicht um eine reine Schwenkbewegung, sondern es besteht für diesen Teil 541 auch die Möglichkeit, in axialer Richtung bei Blickrichtung der Figur 36 von links nach rechts bewegt zu werden, wenngleich eine Spiralfeder 550 dieser Bewegung entgegenwirkt.

Der stabförmige Teil 541 ist in einem zylindrischen Teil angeordnet, wobei dieser zylindrische Teil aus zwei Zylinderhalbteilen 544 und 545 besteht. Entsprechend geht durch den Zylinder 544, 545 eine rechteckige Ausnehmung hindurch, so dass der Stab 541 in Längsrichtung hin- und herbewegt werden kann. Diese Hin- und Herbewegungsrichtung, die über den Nocken 20 bewerkstelligt wird, ist jedoch begrenzt worden. Zu beiden Seiten weist der stabförmige Teil 541 nämlich Vorsprünge 543 und 547 auf, die in entsprechende jedoch größere Ausnehmungen 546 und 547 der beiden Zylinderteile 544 und 545 hineinpassen. Die Feder 550 bewirkt nun, dass der Stab 541 nach links vorgespannt wird bei Blickrichtung der Figur 36. Um eine bessere Führung in Längsrichtung für den Stab 541 sicherzustellen, befinden sich in den Ausnehmungen 546 und 547 Rollen, die mit der Wandung der Ausnehmung und mit den Vorsprüngen 543 und 547 je nach Bewegung des Stabes 541 zusammenwirken.

Bei dieser dritten Ausführungsform der Erfindung führt der Zylinder 544, 545 lediglich Drehbewegungen um seine Achse durch, während der Stab 541 diese Drehbewegungen mitmacht und darüber hinaus auch in seiner Längsrichtung hin- und herbewegt wird. Auf diese Art und Weise wird durch die reine Auf- und Abwärtsbewegung des Nockens 20 unter dem Einfluss der Bewegung eines Containers eben nicht nur eine reine Schwenkbewegung sondern auch eine gemischte Schwenkbewegung mit Axialbewegung bewerkstelligt, was im Zusammenhang mit dem Vorgang des Verriegelns und Entriegelns bedeutsam ist. Es ist nämlich hierbei zu berücksichtigen, dass der Entriegelungsvorgang nicht vollständig ausgeführt werden kann, solange der Container auf dem Fahrzeug aufruht. Es können zwar alle wesentlichen Funktionsteile in die Entriegelungsstellung gebracht werden, diese Teile gehen jedoch erst dann in ihre Anfangslage für die Aufnahme eines weiteren Containers über, wenn der Nocken 20 seine ausgefahrene Position wieder eingenommen hat. Der Nocken kann jedoch diese Position erst einnehmen, wenn der Container zuvor entfernt worden ist. Mit dem Entriegelungshebel 600 kann diese Vorbereitungsstellung eingestellt werden.

Bei einem Schienenfahrzeug und bei einer entsprechend installierten dritten Ausführungsform der Erfindung kann der Entriegelungshebel 600 durch eine entsprechend eingestellte Bake an der Schiene vorbereitet werden. Bei einem Lastkraftfahrzeug kann dieser Entriegelungsvorgang von Hand eingeleitet werden, aber auch ebenso gut mit Hilfe pneumatischer Mittel bewerkstelligt werden. Wesentlich ist, dass in der verriegelten Position kein Container von dem Fahrzeug entnommen werden kann, wohingegen in der zur Abnahme des Containers vorgesehenen Vorbereitungsstellung die Funktionsteile der Verriegelung so gestellt worden sind, dass ein Container abgenommen werden kann.

Wesentlich für die einzelnen Ausführungsformen der Erfindung ist, dass der Verriegelungsvorgang durchgeführt werden kann, ohne dass hierzu eine Hilfsenergie erforderlich ist. Das Gewicht eines Containers, selbst eines leeren ISO-Containers, reicht aus, die Verriegelungen betriebssicher durchzuführen.

## Patentansprüche

1. Vorrichtung zur Verriegelung eines Containers auf einem Fahrzeug, aufweisend einen zum Container-Beschlag passenden Verriegelungsteil und einen Antriebsmechanismus zum Verdrehen und Absenken des Verriegelungsteils und einen auf das Aufsetzen eines Containers (60) auf das Fahrzeug (90) ansprechenden Nockenn (20), der zum Verriegelungsteil ( 10,11) benachbart angeordnet ist und die Absetzbewegung und die Gewichtskraft des Containers abfühlt und übersetzt an den Antriebsmechanismus für den Verriegelungsteil überträgt, **dadurch gekennzeichnet, dass** die Gewichtskraft des Containers über einen Hebel-Feder-Mechanismus umgewandelt wird:
in eine abwärtsgerichtete Kraft zum Absetzen des Verriegelungsteils (10, 11),
in ein Drehmoment zum Verdrehen des Verriegelungsteils (10, 11) um seine Achse, und
in im Wesentlichen horizontal ausgerichtete Schubkräfte, um den Verriegelungsteil (10, 11) in seiner Verriegelungsposition form- und kraftschlüssig zu blockieren.

## Claims

1. A device for locking a container on a vehicle, having a locking part, which matches the container fitting, and a drive mechanism, for rotating and lowering the locking part, and a tappet (20), responsive to the placement of a container (60) on the vehicle (90), which is arranged adjacent to the locking part (10, 11) and senses the setting-down motion and weight of the container and transmits them in translated form to the drive mechanism for the locking part, **characterised in that** the weight of the container is converted via a lever/spring mechanism:
into a downwards-directed force for setting-down of the locking part (10, 11),
into a torque for rotation of the locking part (10, 11) about its axis, and
into substantially horizontally directed pushing forces to block the locking part (10, 11) in its locking position in a positive-locking and non-positive locking manner.

## Revendications

1. Dispositif de verrouillage pour un conteneur sur un véhicule, ce dispositif comprenant un élément de verrouillage adapté à la ferrure du conteneur, ainsi qu'un mécanisme d'entraînement pour faire pivoter et abaisser l'élément de verrouillage et une came (20) réagissant à la pose du conteneur (60) sur le véhicule (90), laquelle came est disposée à proximité de l'élément de verrouillage (10,11) et détecte le mouvement de pose et le poids du conteneur et les transmet avec démultiplication au mécanisme d'entraînement pour l'élément de verrouillage, **caractérisé en ce que** le poids du conteneur est transformé par un mécanisme de ressort et levier
en une force orientée vers le bas pour l'abaissement de l'élément de verrouillage (10, 11),
en un couple de rotation pour faire pivoter l'élément de verrouillage (10, 11) autour de son axe et
en des forces de poussée orientées sensiblement horizontalement, afin de bloquer par complémentarité de forme et assemblage à force l'élément de verrouillage (10, 11) dans sa position de verrouillage.
